# EUROPÄISCHE PATENTSCHRIFT

(11) **EP 4 298 362 B1**
(45) Veröffentlichungstag und Bekanntmachung des Hinweises auf die Patenterteilung: **12.11.2025**
(21) Anmeldenummer: 22711435.2
(22) Anmeldetag: 22.02.2022
(51) Int. Cl.: F16H 25/20, F16H 25/22

(54) **ELEKTROMECHANISCHER SPINDELANTRIEB**
ELECTROMECHANICAL SPINDLE DRIVE
ENTRAÎNEMENT DE BROCHE ÉLECTROMÉCANIQUE

(30) Priorität: 23.02.2021 AT 501232021
(43) Veröffentlichungstag der Anmeldung: 03.01.2024
(73) Patentinhaber: TRUMPF Maschinen Austria GmbH & Co. KG., 4061 Pasching (AT)
(72) Erfinder: SPEZIALI, Stefano, 06034 Foligno (IT)
(74) Vertreter: Burger, Hannes
(86) Internationale Anmeldenummer: PCT/AT2022/060049
(87) Internationale Veröffentlichungsnummer: WO 2022/178564

(56) Entgegenhaltungen:
- EP-A1- 2 319 636
- EP-A1- 2 319 636
- EP-A2- 2 891 824
- WO-A1-2021/121855
- WO-A1-2021/121855
- DE-A1- 102018 127 660
- DE-A1- 102019 205 974
- DE-T5- 112014 005 384
- US-A- 3 161 074
- US-A- 3 161 074

## Beschreibung

Die Erfindung betrifft einen elektromechanischen Spindelantrieb gemäß dem Oberbegriff des Anspruch 1. Die Erfindung betrifft auch ein Spindelantrieb-Bauteileset, eine Umformmaschine und ein Verfahren zum Umformen eines Werkstückes.

Die DE112014005384T5 offenbart einen Motor, der einen Stab in einer Vorwärts- und Rückwärtsrichtung entlang einer Mittelachse des Stabs bewegt. Der Stab weist eine erste Schraubrille in einer Spiralform auf. Der Motor hat auch eine - auf einer radial inneren Seite einer hohlen Welle angeordnete - Kugelmutter mit einer zweiten Schraubrille in Spiralform, wobei eine Mehrzahl von Kugeln zwischen der ersten Schraubrille und der zweiten Schraubrille angeordnet sind. Der Motor umfasst weiters einen Stator sowie eine - auf einer radial inneren Seite des Stators angeordnete - Mehrzahl von Magneten, die an einer Außenoberfläche der hohlen Welle fixiert sind. Die hohle Welle wird durch ein hinteres Lager und ein vorderes Lager getragen.

Aus dem Stand der Technik sind verschiedene Arten von Umformmaschinen, insbesondere Biegemaschinen, bekannt. Dabei wird meistens ein hydraulischer Pressantrieb verwendet, dessen Betätigung die Arbeitsbewegung eines oder mehrerer Umformwerkzeuge(s) auslöst. Bremseinrichtungen sind dazu vorgesehen, die Sicherheit der Maschine zu erhöhen und insbesondere das Personal zu schützen.

Auf einem ganz anderen Gebiet offenbart die EP1524455A2 im Zusammenhang mit einem elektrisch betätigten linearen Aktuator in Form eines Spindelantriebes einen Motor, welcher über ein Getriebe eine Antriebswelle innerhalb des Antriebsgehäuses antreibt. Weiters vorgesehen ist eine Bremseinrichtung, welche eine axial bewegbare erste Kupplungsscheibe und eine mit der Antriebswelle über eine Nabe zusammenwirkende zweite Kupplungsscheibe umfasst. Die erste Kupplungsscheibe drückt die zweite Kupplungsscheibe gegen eine dritte Kupplungsscheibe. Durch Betätigung einer Spule wird die erste Kupplungsscheibe in eine freigebende Stellung bewegt, sodass die zweite Kupplungsscheibe mit der Antriebswelle rotieren kann.

Die EP2333380A1 offenbart ebenfalls im Zusammenhang mit einem linearen Aktuator als Antriebsquelle einen Motor und eine Bremseinrichtung mit einer rotierenden Bremsscheibe und einer stationären Bremsscheibe, welche relativ zur rotierenden Bremsscheibe bewegbar ist und durch Reibung eine Bremsung der Antriebswelle ermöglicht.

Die sich aus dem Stand der Technik ergebenden Nachteile bestehen insbesondere darin, dass die darin offenbarten Antriebe und deren Betrieb für die Anwendung des Umformens von Werkstücken, insbesondere für Umformschritte, welche präzise und reproduzierbar erfolgen müssen, nicht geeignet sind. Zu erwähnen ist auch, dass die Bremswirkung, insbesondere das Bremsmoment bzw. die Bremskraft, für bestimmte Anwendungen zu gering ist. Der Brems-vorgang, d.h. die Zeit, die zwischen einer Betätigung der Bremseinrichtung und der Bremswirkung (z.B. Stillstand des Antriebs oder Abbremsung auf ein gewünschtes Niveau) ergeht, ist dabei oftmals zu lang.

Ein wesentlicher Nachteil der aus dem Stand der Technik bekannten Spindelantriebe besteht darin, dass der erforderliche Bauraum sehr groß ist. Für Anwendungen, bei denen der Platzbedarf eine Rolle spielt, können solche Spindelantriebe daher oftmals nicht eingesetzt werden.

Aufgabe der vorliegenden Erfindung war es, die Nachteile des Standes der Technik zu überwinden und einen Spindelantrieb zur Verfügung zu stellen, bei dem eine zuverlässige und platzsparende Konstruktion gewährleistet wird, wobei insbesondere die Kraft- bzw. Bewegungsübertragung über den Rotationsteil auf die Spindel sichergestellt sein soll.

In einer Variante soll auch ein Verfahren zum Umformen eines Werkstückes zur Verfügung gestellt werden, mit dem einerseits eine unmittelbare und schnell einsetzende Wirkung des Umformwerkzeuges auf das Werkstück erzielt werden kann und andererseits die Effizienz und Genauigkeit der Werkstückumformung erhöht wird. Zudem soll die jeweilige Wirkung des Umformwerkzeuges möglichst definiert sein, insbesondere hinsichtlich der Höhe der ausgeübten Kraft und/oder der Dauer der Krafteinwirkung. Außerdem soll insbesondere für jene Fälle, in denen ein Umformschritt mehrere Teilschritte umfasst, die für eine Werkstückumformung benötigte Zeit reduziert werden können. In bevorzugten Ausführungsformen sollen auch die Bremswirkung und die Effizienz des Bremsvorganges bzw. der Aufbringung des Bremsmomentes erhöht werden.

Diese Aufgabe wird durch einen Spindelantrieb der eingangs genannten Art dadurch gelöst, dass zumindest eines - vorzugsweise zumindest zwei - der Lager im Bereich des Spindelaustrittsendes des Rotationsteils angeordnet ist/sind. Durch diese Maßnahmen wird die Lagerung des Rotationsteils verbessert.

Die Erfindung zeichnet sich weiters dadurch aus, dass das zumindest eine, im Bereich des Spindelaustrittsendes des Rotationsteils angeordnete Lager innerhalb des Rotationsteils, vorzugsweise an einer Innenseite des Rotationsteils, angeordnet ist. Durch eine solche Maßnahme kann der erforderliche Bauraum, insbesondere die Abmessungen senkrecht zur Rotationsachse, deutlich verringert werden. Hier wird der innerhalb des Rotationsteils ohnehin vorhandene Raum für das Lager ausgenützt.

Eine bevorzugte Ausführungsform zeichnet sich dadurch aus, dass das zumindest eine, im Bereich des Spindelaustrittsendes des Rotationsteils angeordnete Lager zwischen der Innenseite des Rotationsteils und einer in das Innere des Rotationsteils ragenden Lageraufnahme angeordnet ist, wobei vorzugsweise die Lageraufnahme an einem Gehäuseteil, vorzugsweise einem stirnseitigen Gehäusedeckel, des Gehäuses ausgebildet ist. Dies gewährleistet eine zuverlässige Halterung des Lagers, für das bevorzugt Gehäuseteile verwendet werden können. Dadurch können der Bauraum und auch das Gewicht weiter verringert werden.

Eine bevorzugte Ausführungsform zeichnet sich dadurch aus, dass das zumindest eine, im Bereich des Spindelaustrittsendes des Rotationsteils angeordnete Lager mit dem Stator und/oder dem Rotor des Motors axial überlappend angeordnet ist und/oder innerhalb eines vom Stator und/oder Rotor des Motors umschlossenen Bereichs angeordnet ist. Durch diese Maßnahme kann auch die axiale Abmessung des Spindelantriebs verringert werden, weil das Lager nicht axial an den Motor anschließt, sondern mit diesem axial überlappt. Mit anderen Worten: Lager und Motor (Stator und/oder Rotor) befinden sich zumindest teilweise auf derselben axialen Höhe.

Eine bevorzugte Ausführungsform zeichnet sich dadurch aus, dass das zumindest eine, im Bereich des Spindelaustrittsendes des Rotationsteils angeordnete Lager ein Wälzlager, insbesondere ein Kugellager, ist.

Eine bevorzugte Ausführungsform zeichnet sich dadurch aus, dass zumindest eines der Lager, vorzugsweise ein radiales Lager, im Bereich des - dem Spindelaustrittsende gegenüberliegenden - Endes des Rotationsteiles angeordnet ist.

Eine bevorzugte Ausführungsform zeichnet sich dadurch aus, dass zumindest eines der Lager ein axiales Lager ist, welches vorzugsweise im Bereich zwischen dem Motor und einer Bremseinrichtung des elektromechanischen Spindelantriebes angeordnet ist. Durch diese Maßnahme wird der erforderliche Bauraum verringert, weil das axiale Lager in einem Bereich angeordnet wird, in dem ohnehin Platz zur Verfügung steht.

Eine bevorzugte Ausführungsform zeichnet sich dadurch aus, dass der Stator des Motors den Rotationsteil umgibt und/oder dass der Rotor des Motors - an der Außenseite des Rotationsteils, vorzugsweise abnehmbar, angebrachte - Polelemente, vorzugsweise in Form von Permanentmagneten, umfasst und/oder dass der Motor ein Synchronmotor ist.

Eine bevorzugte Ausführungsform zeichnet sich dadurch aus, dass der Spindelantrieb ein Rollspindelantrieb ist, bei dem Rollelemente, insbesondere in Form von Kugeln, in einer Umlaufstrecke geführt sind, wobei ein erster Abschnitt der Umlaufstrecke zwischen dem Innengewinde des Rotationsteils und dem Außengewinde der Spindel und ein zweiter Abschnitt durch einen Rückführkanal gebildet ist, wobei der Rückführkanal im Inneren der Spindel ausgebildet ist. Durch die Anordnung des Rückführkanals in der Spindel wird ebenfalls Platz gespart, da die Wände des Rotationsteils (die ansonsten den Rückführkanal beherbergen müssten) dünner gehalten werden können.

Eine bevorzugte Ausführungsform zeichnet sich dadurch aus, dass an dem - dem Spindelaustrittsende gegenüberliegenden - Ende des Rotationsteils ein Aufsatzteil mit dem Rotationsteil verbunden ist, wobei vorzugsweise der Aufsatzteil einen innerhalb des Rotationsteils befindlichen Abschnitt aufweist und/oder einen Anschlag für die Spindel bildet. Der Aufsatzteil ist drehfest (formschlüssig und/oder kraftschlüssig), vorzugsweise starr, mit dem Rotationsteil verbunden und dreht daher mit diesem mit. Der Aufsatzteil kann je nach Bedarf verschiedene Funktionen erfüllen: als Abdeckung, als Schnittstelle für eine Gleitmittelzufuhr in das Innere des Rotationsteils, als Bindeglied zu einer Sensoreinrichtung, etc..

Eine bevorzugte Ausführungsform zeichnet sich dadurch aus, dass ein außerhalb des Rotationsteils befindlicher Abschnitt des Aufsatzteiles in Form eines Stiftes ausgebildet ist, wobei die Längsachse des Stiftes mit der Rotationsachse des Rotationsteiles zusammenfällt, wobei vorzugsweise der maximale Durchmesser des innerhalb des Rotationsteiles befindlichen Abschnittes des Aufsatzteiles zumindest 3 mal, vorzugsweise zumindest 4 mal, so groß ist wie der Durchmesser des Stiftes. Der Stift kann durch andere Strukturen und/oder Bauteile (wie Sensoreinrichtung, Bremseinrichtung, etc.) führen, z.B. zu einem Gleitmittelanschluss.

Eine bevorzugte Ausführungsform zeichnet sich dadurch aus, dass der Spindelantrieb eine Sensoreinrichtung umfasst, wobei ein außerhalb Rotationsteils befindlicher Abschnitt des Aufsatzteils im Erfassungsbereich der Sensoreinrichtung liegt, wobei vorzugsweise die Sensoreinrichtung ein Drehgeber ist, der die Drehung des Aufsatzteils erfasst.

Eine bevorzugte Ausführungsform zeichnet sich dadurch aus, dass in dem Aufsatzteil ein Gleitmittelkanal zum Zuführen von Gleitmittel in das Innere des Rotationsteils ausgebildet ist.

Eine bevorzugte Ausführungsform zeichnet sich dadurch aus, dass der Verlauf eines ersten Abschnittes des Gleitmittelkanals mit der Rotationsachse des Rotationsteils fluchtet, wobei vorzugsweise der erste Abschnitt des Gleitmittelkanals in einem außerhalb des Rotationsteils befindlichen Abschnitt des Aufsatzteiles verläuft. Der erste Abschnitt kann in einem Gleitmitteleinlass enden, welcher an eine (Gleitmittel-)Zuführleitung oder Zuführeinrichtung angeschlossen ist.

Eine bevorzugte Ausführungsform zeichnet sich dadurch aus, dass der Verlauf eines zweiten Abschnittes des Gleitmittelkanals eine - bezüglich der Rotationsachse - radiale Komponente aufweist und/oder schräg zur Rotationsachse ist, wobei vorzugsweise der zweite Abschnitt des Gleitmittelkanals in einem innerhalb des Rotationsteils befindlichen Abschnitt des Aufsatzteiles verläuft und/oder (im Inneren des Rotationsteils) an einer Austrittsstelle, die - bezüglich der Rotationsachse - in einem peripheren Bereich des Aufsatzteiles angeordnet ist, endet. Das Gleitmittel dient der Schmierung des Innengewindes des Rotationsteils und des Außengewindes der Spindel sowie gegebenenfalls der dazwischen angeordneten Rollelemente.

Eine bevorzugte Ausführungsform zeichnet sich dadurch aus, dass der Aufsatzteil von einer Bremseinrichtung des Spindelantriebes umgeben ist, wobei vorzugsweise der Aufsatzteil innerhalb einer zentralen Ausnehmung einer Bremsscheibe der Bremseinrichtung liegt und/oder eine vorzugsweise formschlüssige Aufnahme für eine Bremsscheibe der Bremseinrichtung bildet. Der Aufsatzteil kann somit zur Zentrierung und/oder Positionierung der Bremsscheibe verwendet werden.

Eine bevorzugte Ausführungsform zeichnet sich dadurch aus, dass an der Außenseite des Gehäuses - zumindest im Bereich des Motors - Kühlrippen angeordnet sind, wobei vorzugsweise die Kühlrippen von dem Gehäusekörper abnehmbar sind.

Eine bevorzugte Ausführungsform zeichnet sich dadurch aus, dass der Spindelantrieb modular aufgebaut ist.

Eine bevorzugte Ausführungsform zeichnet sich dadurch aus, dass der Spindelantrieb eine zwischen einer Bremsstellung und einer gelösten Stellung betätigbare Bremseinrichtung auf-weist, wobei die Bremseinrichtung auf den Rotationsteil wirkt, wobei vorzugsweise die Bremseinrichtung im Bereich des - dem Spindelaustrittsende gegenüberliegenden - Endes des Rotationsteils angeordnet ist.

Eine bevorzugte Ausführungsform zeichnet sich dadurch aus, dass die Bremseinrichtung eine mit dem Rotationsteil mitdrehende Bremsscheibe und ein in axialer Richtung verstellbares Bremselement, welches in der Bremsstellung auf die Bremsscheibe einwirkt, aufweist.

Eine bevorzugte Ausführungsform zeichnet sich dadurch aus, dass die Bremsscheibe
- einen inneren Bereich,
- einen ringförmig um die Rotationsachse verlaufenden Reibflächenbereich mit einer ersten Reibfläche, die an einer ersten Seite der Bremsscheibe ausgebildet ist, und
- einen Zwischenbereich, der zwischen dem Reibflächenbereich und dem inneren Bereich um die Rotationsachse verläuft,
aufweist, und dass an dem Bremselement eine erste Gegenfläche ausgebildet ist, die der ersten Reibfläche zugewandt ist und in der Bremsstellung mit der ersten Reibfläche zusammenwirkt.

Das Bremselement rotiert nicht mit dem Rotationsteil. Mit anderen Worten: das Bremselement ist hinsichtlich der Rotation des Rotationsteils bzw. der mit dem Rotationsteil rotationsverbundenen Bremsscheibe stationär. Das Bremselement übt in der Bremsstellung durch Reibschluss mit der Bremsscheibe eine Bremswirkung aus. Gemäß der Ausführungsform der Erfindung befindet sich der Reibflächenbereich in radialer Richtung außerhalb des inneren Bereichs und auch außerhalb des Zwischenbereichs. Während der innere Bereich als Befestigungsbereich (zur Befestigung an den Rotationsteil) dienen kann, ist der Zwischenbereich vorzugsweise verformbar ausgebildet. Es ist bevorzugt, wenn der innere Bereich und der Zwischenbereich auch in der Bremsstellung nicht in Kontakt mit dem Bremselement ist. Die Bremswirkung ist am höchsten im peripheren Bereich. Zum einen ist dort die Geschwindigkeit am größten, zum anderen ist dort auch das größte Bremsmoment aufbringbar.

Das Bremselement ist in axialer Richtung von der gelösten Stellung in die Bremsstellung bewegbar. Durch diese Bewegung wird der Bremsspalt verringert, bis das Bremselement mit seiner ersten Gegenfläche gegen die erste Reibfläche der Bremsscheibe drückt.

Über die radial weiter innen liegenden Bereiche (innerer Bereich und Zwischenbereich) wird das Bremsmoment auf den Rotationsteil übertragen.

Die Bremsscheibe kann - mit ihrem inneren Bereich - relativ zum Rotationsteil axial fixiert sein. Das Bremselement drückt in der Bremsstellung gegen den weiter außen liegenden Reibflächenbereich, wodurch eine Verformungskraft auf die Bremsscheibe ausgeübt wird. Letztere möchte sich in axialer Richtung verbiegen.

Der Rotationsteil kann z.B. eine Antriebswelle, eine Gewindemutter (z.B. bei einem Spindelantrieb), ein Rotor (eines Elektromotors) oder jedes beliebige, sich drehende Element eines Antriebsstranges sein.

Eine bevorzugte Ausführungsform zeichnet sich dadurch aus, dass der Zwischenbereich der Bremsscheibe - sowohl in der gelösten Stellung als auch in der Bremsstellung - kontaktfrei zu dem Bremselement ist und/oder dass in der Bremsstellung der Kontakt des Bremselementes mit der Bremsscheibe auf die erste Reibfläche beschränkt ist. Durch diese Maßnahme wird bewirkt, dass der Reibschluss nur im Bereich des Reibflächenbereichs entsteht, während der innere Bereich und der Zwischenbereich mit dem Bremselement nicht in direkten Kontakt gelangen. Insbesondere der Zwischenbereich kann so eine zusätzliche Funktionalität wahrnehmen.

Eine bevorzugte Ausführungsform zeichnet sich dadurch aus, dass der Zwischenbereich ein Verformungsbereich ist, der durch die Wirkung des Bremselementes auf die Bremsscheibe in axialer Richtung elastisch verformbar ist. Im Gegensatz zu bekannten Lösungen kann hier die Bremsscheibe an dem Rotationsteil axial fixiert sein. Überhaupt kann eine starre Verbindung zwischen Bremsscheibe und Rotationsteil vorgesehen werden. Dadurch wird die Bremswirkung erhöht, insbesondere wird die Bremskraft unmittelbar auf den Rotationsteil übertragen.

Eine bevorzugte Ausführungsform zeichnet sich dadurch aus, dass im Verformungsbereich Ausschnitte, vorzugsweise in Form von Durchbrechungen, und/oder Materialschwächungen ausgebildet sind. Durch die Anzahl der Ausschnitte kann der Grad der Verformbarkeit festgelegt und für verschiedene Anwendungsgebiete optimiert werden. Alternativ kann sich der Verformungsbereich auch durch geringere Materialdicke im Vergleich zum inneren Bereich und/oder Reibflächenbereich auszeichnen.

Eine bevorzugte Ausführungsform zeichnet sich dadurch aus, dass im Verformungsbereich die Gesamtfläche der Ausschnitte zumindest so groß ist wie die Gesamtfläche, die vom verbleibenden Material eingenommen wird. Dadurch wird eine ausreichende Verformung gewährleistet, insbesondere für den Fall, dass der Reibflächenbereich in der Bremsstellung gegen eine zweite Gegenfläche gedrückt wird.

Eine bevorzugte Ausführungsform zeichnet sich dadurch aus, dass der Reibflächenbereich eine zweite Reibfläche, die an der zweiten, der ersten Seite gegenüberliegenden Seite der Bremsscheibe ausgebildet ist, aufweist, und dass der Reibflächenbereich der Bremsscheibe zwischen der ersten Gegenfläche und einer zweiten Gegenfläche, die der zweiten Reibfläche zugewandt ist und in der Bremsstellung mit der zweiten Reibfläche zusammenwirkt, angeordnet ist. In der gelösten Stellung der Bremseinrichtung ist zwischen den jeweiligen zusammenwirkenden Flächen ein Bremsspalt ausgebildet. Durch einen verformbaren Zwischenbereich kann auf elegante Weise - und alternativ zu einer axialen Verschiebbarkeit der Bremsscheibe relativ zum Rotationsteil - gewährleistet werden, dass durch eine Verformung der Bremsscheibe in axialer Richtung der/die Bremsspalte vollflächig geschlossen werden.

Eine bevorzugte Ausführungsform zeichnet sich dadurch aus, dass die erste Gegenfläche ringförmig ist und/oder dass die zweite Gegenfläche ringförmig ist.

Eine bevorzugte Ausführungsform zeichnet sich dadurch aus, dass der Reibflächenbereich in der Peripherie der Bremsscheibe angeordnet ist, wobei vorzugsweise die erste Reibfläche und/oder die zweite Reibfläche bis an den Außenrand der Bremsscheibe reichen. Wie bereits erwähnt ist die Bremswirkung im äußersten Bereich der Bremsscheibe am größten.

Eine bevorzugte Ausführungsform zeichnet sich dadurch aus, dass die Differenz zwischen dem Außenradius und dem Innenradius des Reibflächenbereiches höchstens 1/3, vorzugsweise höchstens 1/4, des Außenradius der Bremsscheibe beträgt.

Eine bevorzugte Ausführungsform zeichnet sich dadurch aus, dass der elektromechanische Antrieb ein Gehäuse aufweist und dass die zweite Gegenfläche an einem Gehäuseteil oder an einem mit dem Gehäuseteil fest verbundenen Element ausgebildet ist. Durch diese Maßnahme kann das Bremsmoment direkt in das (stationäre) Gehäuse eingeleitet werden. Auch die in Form von Wärme abgegebene Bremsenergie kann ins Gehäuse übergehen, wodurch auf eine aufwendige Bremskühlung verzichtet werden kann, da die Wärme direkt über das Gehäuse nach außen geleitet werden kann.

Eine bevorzugte Ausführungsform zeichnet sich dadurch aus, dass der innere Bereich der Bremsscheibe zumindest eine, vorzugsweise mehrere - vorzugsweise ringförmig angeordnete - Befestigungsschnittstellen, vorzugsweise in Form von Löchern, zur Befestigung der Bremsscheibe an den Rotationsteil aufweist, wobei vorzugsweise die Anzahl der Befestigungsschnittstellen größer als 10 und/oder größer als die Anzahl der Aus-schnitte im Verformungsbereich ist. Besonders bevorzugt ist hier eine starre Verbindung zwischen Bremsscheibe und Rotationsteil, welche z.B. durch Schrauben gewährleistet werden kann.

Eine bevorzugte Ausführungsform zeichnet sich dadurch aus, dass in der gelösten Stellung der Bremseinrichtung die erste Reibfläche und die erste Gegenfläche von einer parallelen Ausrichtung abweichen und/oder dass in der gelösten Stellung der Bremseinrichtung die zweite Reibfläche und die zweite Gegenfläche von einer parallelen Ausrichtung abweichen. Mit dieser Maßnahme kann z.B. der Druck an einem weiter innenliegenden Abschnitt des Reibflächenbereiches verringert werden, während er in einem weiter außen liegenden Abschnitt relativ dazu erhöht werden kann. Dadurch lässt sich bei entsprechender Dimensionierung der Reib- bzw. Gegenfläche(n) (bzw. des Bremsspaltes) eine gleichmäßigere Druckverteilung erreichen. Dies führt zu weniger Verschleiß und erhöhter Lebensdauer. Diese Vorteile lassen sich beispielsweise auch durch folgende bevorzugte Ausführungsformen erreichen.

Eine bevorzugte Ausführungsform zeichnet sich dadurch aus,
dass der Abstand zwischen der ersten Reibfläche und der ersten Gegenfläche in radialer Richtung abnimmt, wobei vorzugsweise dieser Abstand an dem radial äußeren Rand der ersten Reibfläche um höchstens 1mm, bevorzugt um höchstens 0,2mm, kleiner ist als an dem radial inneren Rand der ersten Reibfläche,
und/oder dass der Abstand zwischen der zweiten Reibfläche und der zweiten Gegenfläche in radialer Richtung abnimmt, wobei vorzugsweise dieser Abstand an dem radial äußeren Rand der zweiten Reibfläche um höchstens 1mm, bevorzugt um höchstens 0,2mm, kleiner ist als an dem radial inneren Rand der zweiten Reibfläche.
In der Bremsstellung wird sodann der Druck an einem weiter innenliegenden Abschnitt des Reibflächenbereiches verringert, während er in einem weiter außen liegenden Abschnitt relativ dazu erhöht wird. Außerdem kann dadurch in gewissem Ausmaß eine Anpassung an eine - sich während des Bremsvorganges in axialer Richtung verbiegende - Bremsscheibe erfolgen.

Eine bevorzugte Ausführungsform zeichnet sich dadurch aus, dass in der gelösten Stellung der Bremseinrichtung die erste Reibfläche und die erste Gegenfläche zueinander geneigt sind und/oder dass in der gelösten Stellung der Bremseinrichtung die zweite Reibfläche und die zweite Gegenfläche zueinander geneigt sind.

Eine bevorzugte Ausführungsform zeichnet sich dadurch aus, dass die erste Reibfläche und/oder die erste Gegenfläche in radialer Richtung einen gekrümmten Verlauf aufweisen und/oder dass die zweite Reibfläche und/oder die zweite Gegenfläche in radialer Richtung einen gekrümmten Verlauf aufweisen.

Eine bevorzugte Ausführungsform zeichnet sich dadurch aus, dass der innere Bereich der Bremsscheibe an dem Rotationsteil axial fixiert ist und/oder dass der innere Bereich der Bremsscheibe mit dem Rotationsteil starr verbunden ist, vorzugsweise über Schrauben.

Eine bevorzugte Ausführungsform zeichnet sich dadurch aus, dass zwischen dem inneren Bereich der Bremsscheibe und dem Rotationsteil ein erster Distanzring angeordnet ist, wobei vorzugsweise der innere Bereich der Bremsscheibe zwischen dem ersten Distanzring und einem zweiten Distanzring eingezwängt ist, vorzugsweise mittels Schrauben. Der/die Distanzringe können dazu verwendet werden, die Relativposition der Reibfläche(n) relativ zu der/den Gegenfläche(n) einzustellen bzw. zu optimieren. Sie sorgen zudem für eine gleichmäßige Druckverteilung.

Eine bevorzugte Ausführungsform zeichnet sich dadurch aus, dass der elektromechanische Antrieb ein Spindelantrieb ist, wobei der Rotationsteil, mit dem die Bremsscheibe verbunden ist, in Form einer Gewindemutter ausgebildet ist, welche mit der Spindel des Spindelantriebs zusammenwirkt.

Eine bevorzugte Ausführungsform zeichnet sich dadurch aus, dass die Bremsscheibe einen scheibenförmigen Grundkörper aufweist und dass die erste Reibfläche und/oder die zweite Reibfläche durch einen vorzugsweise ringförmigen Bremsbelag gebildet wird, welcher auf dem Grundkörper aufgebracht ist und/oder in axialer Richtung über den Grundkörper vorsteht.

Eine bevorzugte Ausführungsform zeichnet sich dadurch aus, dass das Bremselement in Richtung Bremsstellung vorgespannt ist. Unabhängig von einer Betätigung oder Bestromung kann hier also durch passive (Feder)Elemente die Bremsstellung gehalten werden.

Eine bevorzugte Ausführungsform zeichnet sich dadurch aus, dass das Bremselement in Richtung Bremsstellung durch eine Vielzahl von Federn, die ringförmig und vorzugsweise mit der ersten Gegenfläche überlappend angeordnet sind, vorgespannt ist.

Eine bevorzugte Ausführungsform zeichnet sich dadurch aus, dass die Federn in einem abnehmbaren Gehäuseteil des elektromechanischen Antriebes eingesetzt sind.

Eine bevorzugte Ausführungsform zeichnet sich dadurch aus, dass die Bremseinrichtung einen - von der Steuereinrichtung ansteuerbaren - Aktor, vorzugsweise in Form eines Elektromagneten, umfasst, durch den das Bremselement in die gelöste Stellung und/oder in die Bremsstellung bringbar ist, wobei vorzugsweise der Aktor in einem abnehmbaren Gehäuseteil des elektromechanischen Antriebes eingesetzt ist. Eine solche Variante hat den Vorteil, dass bei Stromausfall oder einem Ansteuerungsfehler die Elektromagnete stromlos sind und die Bremseinrichtung automatisch in die Bremsstellung fällt.

Eine bevorzugte Ausführungsform zeichnet sich dadurch aus, dass die Bremseinrichtung in dem elektromechanischen Antrieb integriert ist und/oder dass der Motor und die Bremseinrichtung in einem gemeinsamen Gehäuse untergebracht sind. Dadurch wird die Unmittelbarkeit der Bremswirkung erhöht, da das Bremsen im unmittelbaren Bereich der Generierung des Motormoments erfolgt.

Die Erfindung betrifft auch ein Spindelantrieb-Bauteileset umfassend Bauteile für mehrere erfindungsgemäße elektromechanische Spindelantriebe wobei das Bauteileset Bauteile verschiedener Art auf-weist und die Bauteile Verbindungsschnittstellen zur Verbindung der Bauteile untereinander aufweisen, und dass Bauteile derselben Art verschiedene Größen aufweisen, wobei die Verbindungsschnittstellen verschieden großer Bauteile derselben Art gleich dimensioniert sind. Durch diese Maßnahme kann ein Spindelantrieb auf einfache Weise den gegebenen Anforderungen angepasst werden. Dabei können Baugröße, Leistung, Kraft, (Spindel-)Hub, Gewicht, Kühlleistung entsprechend als Kriterien dazu dienen, die gewünschten Bauteile auszuwählen und zu einem erfindungsgemäßen Spindelantrieb zusammenzubauen. Die Verbindungsschnittstellen können dabei mechanische Schnittstellen (Befestigungsstellen bzw. -mechanismen) für Gehäuseteile, Rotationsteil, Spindel, Motorteile (wie z.B. variable Zahl vom Polelementen an dem Rotationsteil), etc., elektrische und steuerungsbezogene Schnittstellen z.B. für Motor, Bremseinrichtung und/oder Sensoreinrichtung, hydraulische Schnittstellen oder Fluidzuführschnittstellen (Gleitmittel) sein.

Eine bevorzugte Ausführungsform zeichnet sich dadurch aus, dass das Bauteileset
- erste Gehäuseteile unterschiedlicher Länge und/oder Breite und
- zweite Gehäuseteile unterschiedlicher Länge und/oder Breite
aufweist, wobei die Verbindungsschnittstellen der ersten Gehäuseteile zur Ver-bindung mit den zweiten Gehäuseteilen bei allen ersten Gehäuseteilen und bei allen zweiten Gehäuseteilen gleich dimensioniert sind. Dadurch können Gehäuseteile unabhängig von ihrer Größe mit anderen Gehäuseteilen verbunden werden.

Eine bevorzugte Ausführungsform zeichnet sich dadurch aus, dass das Bauteileset
- Rotationsteile unterschiedlicher Länge und/oder Breite und
- Gehäuseteile unterschiedlicher Länge und/oder Breite und/oder Motoren unterschiedlicher Länge und/oder Breite
aufweist,
wobei die Verbindungsschnittstellen der Rotationsteile zur Verbindung mit den Gehäuseteilen und/oder Motoren bei allen Rotationsteilen gleich dimensioniert sind
und/oder wobei die Verbindungsschnittstellen der Gehäuseteilen und/oder Motoren zur Verbindung mit den Rotationsteilen bei allen Gehäuseteilen und/oder Mo-toren gleich dimensioniert sind.

Die Erfindung betrifft auch eine Umformmaschine, insbesondere Biegemaschine, zum Umformen eines, vorzugsweise plattenförmigen, Werkstückes,
wobei die Umformmaschine
- zumindest einen erfindungsgemäßen elektromechanischen Spindelantrieb,
- zumindest ein Umformwerkzeug, dessen Arbeitsbewegung durch den elektromechanischen Antrieb bewirkt wird,
umfasst.

Die Erfindung betrifft auch Verfahren zum Umformen eines, vorzugsweise plattenförmigen, Werkstückes mit einer erfindungsgemäßen Umformmaschine, insbesondere einer Biegemaschine, wobei der Motor des elektromechanischen Spindelantriebes zum Umformen des Werkstückes durch eine Steuereinrichtung angesteuert wird.

In einem bevorzugten Verfahren zum Umformen eines, vorzugsweise plattenförmigen, Werkstückes mit einer Umformmaschine, insbesondere einer Biegemaschine, umfasst die Umformmaschine
- zumindest einen elektromechanischen Antrieb (Spindelantrieb) mit einer elektrischen Antriebsquelle (Motor),
- zumindest ein Umformwerkzeug, dessen Arbeitsbewegung durch den elektromechanischen Antrieb bewirkt wird, und
- zumindest eine zwischen einer gelösten Stellung und einer Bremsstellung betätigbare Bremseinrichtung, vorzugsweise in Form einer Reibungsbremse, zum Bremsen und/oder Blockieren der Arbeitsbewegung des Umformwerkzeuges.
Eine solche Ausführungsform zeichnet sich dadurch aus,
dass vor einer Bewegungsphase des Umformwerkzeuges die elektrische Antriebsquelle ein Antriebsmoment generiert, während die Bremseinrichtung in der Bremsstellung ist, sodass das Bremsmoment der Bremseinrichtung dem Antriebsmoment der elektrischen Antriebsquelle entgegenwirkt, und der Beginn der Bewegungsphase des Umformwerkzeuges durch Überführen der Bremseinrichtung in die gelöste Stellung und/oder in eine Stellung mit verringertem Bremsmoment ausgelöst wird
   und/oder
dass während eines Umformschrittes die Arbeitsbewegung des Umformwerkzeuges intermittierend erfolgt.

Bei dem umzuformenden Werkstück handelt es sich vorzugsweise um ein plattenförmiges Werkstück aus Metall, insbesondere ein Blech. Die Umformmaschine ist somit vorzugsweise eine Blechumformmaschine, insbesondere eine Biegemaschine, wie eine Biegepresse oder eine Schwenkbiegemaschine.

Das Verfahren wird durch eine Steuereinrichtung gesteuert. Die Steuereinrichtung steuert einerseits die elektrische Antriebsquelle und andererseits die Bremseinrichtung, sodass mit der Steuereinrichtung die Bewegungsphase(n), insbesondere deren Beginn und/oder deren Abfolge, gesteuert werden können. Die Steuereinrichtung betätigt somit - entsprechend dem Verfahren - die elektrische Antriebsquelle und die Bremseinrichtung und steuert damit Antriebsmoment (der Antriebsquelle) und Bremsmoment (der Bremseinrichtung). Die Antriebsquelle und die Bremseinrichtung wirken dabei - direkt oder indirekt - auf das Umformwerkzeug ein.

So kann z.B. in der Steuereinrichtung (z.B. neben anderen Betriebsmodi) ein Betriebsmodus hinterlegt sein, welcher dem Verfahren entspricht.

Durch die Maßnahme dieser Ausführungsform kann die Arbeitsbewegung des Umformwerkzeuges in einzelne Bewegungsphasen unterteilt werden, wobei zwischen den einzelnen Bewegungsphasen das Umformwerkzeug gestoppt oder verlangsamt wird. Die Unterteilung in die einzelnen Bewegungsphasen erfolgt durch die Bremseinrichtung. D.h. die Arbeitsbewegung kann durch die Bremseinrichtung gesteuert werden.

Diese Ausführungsform besitzt zwei wesentliche Vorteile. Die Bremseinrichtung dient gemäß der ersten Variante dazu den Beginn einer Bewegungsphase auszulösen. Dadurch übernimmt die Bremseinrichtung eine Steuerfunktion, welche sich nicht (nur) auf das Bremsen bzw. Stoppen einer Arbeitsbewegung bezieht, sondern auf das Auslösen bzw. Freigeben einer Bewegung. Eine solche Art der Ansteuerung kann nicht nur für eine einmalige Bewegungsphase, sondern insbesondere auch auf für intermittierende (z.B. hämmernde) Arbeitsbewegungen mit mehreren unterbrochenen Bewegungsphasen verwendet werden. Hier kommt der Bremseinrichtung die Funktion zu, den Ablauf der Bewegungsphasen zu steuern.

Der große Vorteil dieser Idee besteht darin, dass das zu Beginn der Bewegungsphase (und somit zu Beginn der Werkstückbearbeitungsphase) das Antriebsmoment der Antriebsquelle nicht erst aufgebaut werden muss, sondern bereits zur Verfügung steht. Ein schnelles Überführen der Bremseinrichtung in die gelöste Stellung bewirkt ein unmittelbares Einwirken des bereits vorhandenen Antriebsmomentes auf das Umformwerkzeug und somit auf das Werkstück. Dadurch erfolgt ein definierter Arbeitsschritt, welcher zudem durch einen zeitlich und hinsichtlich der einwirkenden Kraft definierten und stets genau reproduzierbaren Puls bzw. Stoß eingeleitet wird.

Ein weiterer Vorteil besteht darin, dass eine Abfolge von Bewegungsphasen in intermittierender Betätigung durch das Zusammenwirken einer elektrischen Antriebsquelle mit einer betätigbaren Bremseinrichtung überhaupt erst ermöglicht wird. Auch hier wird das Verfahren durch die Steuereinrichtung gesteuert. Die Steuereinrichtung steuert einerseits die elektrische Antriebsquelle und andererseits die Bremseinrichtung, sodass mit der Steuereinrichtung die Bewegungsphase(n) der intermittierenden Bewegung, insbesondere deren Beginn und/oder deren Abfolge, gesteuert werden können.

Die Bremseinrichtung umfasst einen Aktor, der mit der Steuereinrichtung der Umformmaschine verbunden ist. Die Steuereinrichtung überführt somit die Bremseinrichtung durch Ansteuern des Aktors zwischen gelöster und Brems-Stellung.

Die Bremseinrichtung ist vorzugsweise eine Reibungsbremse. Dadurch kann ein besonders schneller Übergang zwischen Bremsstellung und gelöster Stellung erreicht werden. Dadurch können die Bewegungsphasen und die Phasen zwischen den Bewegungsphasen jeweils bevorzugt weniger als 1,5 Sekunden, vorzugsweise weniger als 1 Sekunde, betragen.

Eine bevorzugte Ausführungsform zeichnet sich dadurch aus, dass die Bewegungsrichtung des Umformwerkzeuges in den einzelnen Bewegungsphasen einer intermittierenden Arbeitsbewegung unverändert bleibt und/oder dass sich der während einer intermittierenden Arbeitsbewegung zurückgelegte Weg des Umformwerkzeuges aus den während der einzelnen Bewegungsphasen der intermittierenden Arbeitsbewegung zurückgelegten Wegabschnitten zusammensetzt. Hier handelt es sich um eine fortschreitende Bewegung des Umformwerkzeuges. Z.B. kann hier ein Biegeschritt durch einzelne Teilschritte erreicht werden. Dabei können die (sich wiederholenden) stoßartigen Bewegungen des Umformwerkzeuges die nötige Umformkraft erzeugen.

Eine bevorzugte Ausführungsform zeichnet sich dadurch aus, dass die Arbeitsbewegung des Umformwerkzeuges während eines Umformschrittes mehrere, vorzugsweise zumindest drei, Bewegungsphasen umfasst, wobei die Bewegungsphasen unterbrochen sind durch Phasen, in denen das Umformwerkzeug stillsteht oder mit geringerer Geschwindigkeit als in der Bewegungsphase bewegt wird, wobei vorzugsweise jeweils die Länge einer einzelnen Bewegungsphase weniger als 3 Sekunden, bevorzugt weniger als 1,5 Sekunden, beträgt und/oder wobei vorzugsweise jeweils die Länge einer Phase, in denen das Umformwerkzeug stillsteht oder mit geringerer Geschwindigkeit als in der Bewegungsphase bewegt wird, weniger als 3 Sekunden, bevorzugt weniger als 1,5 Sekunden, beträgt.

Eine bevorzugte Ausführungsform zeichnet sich dadurch aus, dass eine intermittierende Arbeitsbewegung des Umformwerkzeuges durch eine intermittierende Betätigung der Bremseinrichtung zwischen gelöster Stellung und Bremsstellung bewirkt wird. Hier übernimmt die Bremseinrichtung eine Steuerfunktion, wodurch eine präzise und wohldefinierte Bearbeitung des Werkstückes gewährleistet wird.

Eine bevorzugte Ausführungsform zeichnet sich dadurch aus, dass die elektrische Antriebsquelle auch während jener Phasen der intermittierenden Betätigung der Bremseinrichtung, in denen sich die Bremseinrichtung in der Bremsstellung befindet, ein Antriebsmoment generiert. Die Antriebsquelle muss hier nicht immer von neuem ein Antriebsmoment aufbauen, was zu Beginn einer jeden Bewegungsphase mit einer wiederkehrenden Latenz verbunden wäre.

Eine bevorzugte Ausführungsform zeichnet sich dadurch aus, dass das Antriebsmoment des Motors während eines Umformschrittes mit intermittierender Arbeitsbewegung des Umformwerkzeuges im Wesentlichen konstant gehalten wird. Dadurch wird der Steueraufwand für die Antriebsquelle minimiert, während die Steuerung über die Bremseinrichtung erfolgt.

Eine bevorzugte Ausführungsform zeichnet sich dadurch aus, dass der elektromechanische Antrieb einen Rotationsteil umfasst und die Bremseinrichtung auf den Rotationsteil wirkt, wobei vorzugsweise die elektrische Antriebsquelle durch einen Motor, dessen Antriebsmoment auf den Rotationsteil wirkt, gebildet ist. Hier können einfache und effiziente Bremseinrichtungen wie Reibungsbremsen sowie leistungsstarke Antriebe wie Motoren verwendet werden.

Eine bevorzugte Ausführungsform zeichnet sich dadurch aus, dass das auf den Rotationsteil wirkende Bremsmoment - während jener Phasen der intermittierenden Betätigung der Bremseinrichtung, in denen sich die Bremseinrichtung in der Bremsstellung befindet - höher ist als das auf den Rotationsteil wirkende Antriebsmoment. Durch diese Maßnahme kann die Bewegung des Umformwerkzeuges zwischen den einzelnen Bewegungsphasen zum Stillstand gebracht werden.

Eine bevorzugte Ausführungsform zeichnet sich dadurch aus, dass der elektromechanische Antrieb einen Übertragungsmechanismus, insbesondere ein Lineargetriebe, umfasst, der die Rotation des Rotationsteils in eine lineare Bewegung eines Übertragungselementes, welches direkt oder indirekt auf das Umformwerkzeug wirkt, umwandelt, wobei vorzugsweise das Übertragungselement in Form einer Spindel ausgebildet ist.

Eine bevorzugte Ausführungsform zeichnet sich dadurch aus, dass die Bremseinrichtung in dem elektromechanischen Antrieb integriert ist und/oder dass die elektrische Antriebsquelle und die Bremseinrichtung in demselben Gehäuse untergebracht sind.

Die Erfindung betrifft auch eine Umformmaschine, insbesondere Biegemaschine, zum Umformen eines, vorzugsweise plattenförmigen, Werkstückes, wobei die Umformmaschine
- zumindest einen elektromechanischen Antrieb mit einer elektrischen Antriebsquelle,
- zumindest ein Umformwerkzeug, dessen Arbeitsbewegung durch den elektromechanischen Antrieb bewirkt wird,
- zumindest eine zwischen einer gelösten Stellung und einer Bremsstellung betätigbare Bremseinrichtung zum Bremsen und/oder Blockieren der Arbeitsbewegung des Umformwerkzeuges und
- eine Steuereinrichtung zur Steuerung der elektrischen Antriebsquelle und der Bremseinrichtung

umfasst, dadurch gekennzeichnet, dass in der Steuereinrichtung ein Betriebsmodus hinterlegt ist, durch den die elektrische Antriebsquelle und die Bremseinrichtung derart ansteuerbar sind,
dass vor einer Bewegungsphase des Umformwerkzeuges die elektrische Antriebsquelle ein Antriebsmoment generiert, während die Bremseinrichtung in der Bremsstellung ist, sodass das Bremsmoment der Bremseinrichtung dem Antriebsmoment der elektrischen Antriebsquelle entgegenwirkt, und der Beginn der Bewegungsphase des Umformwerkzeuges durch Überführen der Bremseinrichtung in die gelöste Stellung und/oder in eine Stellung mit verringertem Bremsmoment ausgelöst wird
und/oder dass während eines Umformschrittes die Arbeitsbewegung des Umformwerkzeuges intermittierend erfolgt.

Die Umformmaschine ist vorzugsweise eine Biegemaschine und kann z.B. als Biegepresse, insbesondere Abkantpresse, oder als Schenkbiegemaschine ausgebildet sein.

Eine solche Umformmaschine kann einen ersten (z.B. oberen) Werkzeugträger und einen zweiten (z.B. unteren) Werkzeugträger umfassen, deren Relativbewegung die Arbeitsbewegung ist. Dabei kann z.B. ein Werkzeugträger stationär sein, während der andere Werkzeugträger durch den elektrischen Antrieb bewegbar ist.

Der zumindest eine elektrische Antrieb der Umformmaschine wirkt dabei auf einen Werkzeugträger, vorzugsweise den oberen Werkzeugträger. Das Umformwerkzeug wird von einem Werkzeugträger gehalten.

Eine bevorzugte Ausführungsform zeichnet sich dadurch aus, dass der elektromechanische Antrieb einen Rotationsteil umfasst und die Bremseinrichtung auf den Rotationsteil wirkt, wobei vorzugsweise die elektrische Antriebsquelle durch einen Motor, dessen Antriebsmoment auf den Rotationsteil wirkt, gebildet ist.

In nachfolgenden Ausführungsformen sollen auch die Bremswirkung und die Effizienz des Bremsvorganges bzw. der Aufbringung des Bremsmomentes erhöht werden. Dadurch soll insbesondere die Sicherheit bei Anwendungen, in denen Bedienpersonen im Gefahrenbereich arbeiten bzw. hantieren und Antriebe aus diesem Grund unter bestimmten Bedingungen unmittelbar zum Stillstand kommen müssen, erhöht werden. Die Zuverlässigkeit, Leistungsfähigkeit und Einsetzbarkeit eines elektromechanischen Antriebes in verschiedensten Anwendungsgebieten soll durch eine Verbesserung der Bremseinrichtung erhöht werden.

Eine bevorzugte Ausführungsform der Umformvorrichtung zeichnet sich dadurch aus, dass die Steuereinrichtung mit dem hinterlegten Betriebsmodus dazu eingerichtet ist, durch Ansteuerung der elektrischen Antriebsquelle und der Bremseinrichtung die Umformmaschine gemäß einem Verfahren, insbesondere nach einem der oben beschriebenen Ausführungsformen zu betreiben.

Eine bevorzugte Ausführungsform des Verfahrens zeichnet sich dadurch aus, dass die Umformmaschine gemäß der Erfindung, insbesondere nach einem der oben beschriebenen Ausführungsformen ausgebildet ist.

Das Ziel wird auch erreicht mit einer Umformmaschine, insbesondere Biegemaschine, vorzugsweise einer Biegepresse, mit zumindest einem Antrieb für die Arbeitsbewegung, insbesondere einem Pressantrieb, wobei der zumindest eine Antrieb ein elektromechanischer Antrieb ist. Eine solche Umformmaschine kann einen ersten (z.B. oberen) Werkzeugträger und einen zweiten (z.B. unteren) Werkzeugträger umfassen, deren Relativbewegung die Arbeitsbewegung ist. Der oben beschriebene elektromechanische Antrieb eignet sich besonders gut für den Einsatz in einer Umformmaschine, da die vorgeschlagene Bremseinrichtung besonders schnell reagiert und damit insbesondere das Bedienpersonal zuverlässig geschützt (insbesondere in Fällen, in denen eine Abschaltung oder ein Stopp/Verlangsamung der Arbeitsbewegung für die Sicherheit relevant ist) aber auch Werkstücke vor falschen bzw. fehlerbehafteten Bearbeitungsroutinen "geschützt" werden.

Zum besseren Verständnis der Erfindung wird diese anhand der nachfolgenden Figuren näher erläutert.

Es zeigen jeweils in stark vereinfachter, schematischer Darstellung:
- Fig. 1: einen elektromechanischen Antrieb im Schnitt;
- Fig. 2: einen Ausschnitt einer Bremseinrichtung mit perspektivischem Einblick;
- Fig. 3: eine Bremseinrichtung im Schnitt;
- Fig. 4: eine Bremsscheibe;
- Fig. 5: das Zusammenwirken des Bremselementes und der Bremsscheibe;
- Fig. 6: eine Bremseinrichtung in gelöster Stellung;
- Fig. 7: eine Bremseinrichtung in gelöster Stellung;
- Fig. 8: eine Bremseinrichtung mit zweiter Brems- und Gegenfläche in gelöster Stellung;
- Fig. 9: eine Bremseinrichtung mit zweiter Brems- und Gegenfläche in gelöster Stellung;
- Fig. 10: eine Bremseinrichtung mit vorgespanntem Bremselement;
- Fig. 11: einen Gehäuseteil mit Aufnahmen für Federn und einer Aufnahme für einen Aktor;
- Fig. 12: eine Umformmaschine, in Form einer Biegepresse, mit elektromechanischen Antrieben;
- Fig. 13: eine Steuereinrichtung mit einem elektromechanischen Antrieb;
- Fig. 14: in einer ersten Ausführungsform den zeitlichen Verlauf des Antriebsmomentes der Antriebsquelle und des Bremsmomentes der Bremseinrichtung;
- Fig. 15: in einer zweiten Ausführungsform den zeitlichen Verlauf des (im wesentlichen konstanten) Antriebsmomentes der Antriebsquelle und des (intermittierenden) Bremsmomentes der Bremseinrichtung bei intermittierender Arbeitsbewegung;
- Fig. 16: in einer dritten Ausführungsform den zeitlichen Verlauf des (intermittierenden) Antriebsmomentes und des (intermittierenden) Bremsmomentes bei intermittierender Arbeitsbewegung;
- Fig. 17: den während eines Umformschrittes zurückgelegten Weg eines Umformwerkzeuges;
- Fig. 18: einen Aufsatzteil für den Rotationsteil.
Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

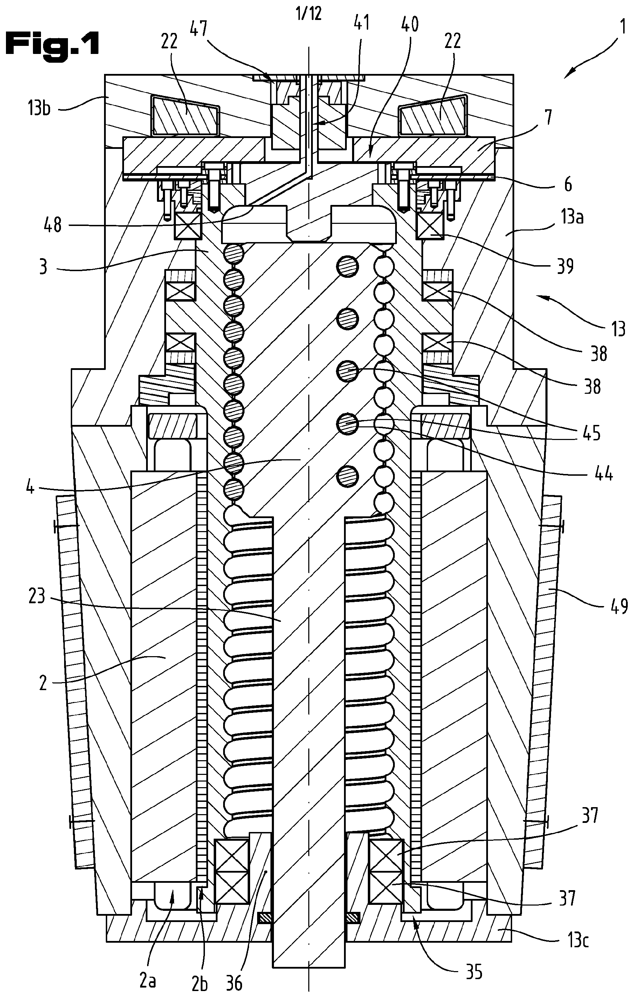

Fig. 1 zeigt einen elektromechanischen Spindelantrieb 1 umfassend ein Gehäuse 13, einen Motor 2 und einen Rotationsteil 3, der durch den Motor 2 um eine Rotationsachse 4 in Rotation versetzbar ist. Der Rotationsteil 3 ist in Form einer Spindelmutter ausgebildet. Eine Spindel 23 wirkt mit dem Rotationsteil 3 zusammen. Der Gewindeabschnitt (Außengewinde) der Spindel 23 ist innerhalb des Rotationsteils 3 angeordnet und wirkt dort - vorzugsweise über Rollelemente 45 - mit dem Innengewinde des als Spindelmutter ausgebildeten Rotationsteils 3 zusammen. Die Spindel 23 tritt an einem Spindelaustrittsende 35 aus dem Rotationsteil 3 aus.

Der Motor 2 weist einen Stator 2a, der z.B. an der Innenseite des Gehäuses 13 gelagert ist (z.B. in Form von Wicklungen), und einen Rotor 2b, der z.B. mit dem Rotationsteil 3 verbunden und/oder direkt an dem Rotationsteil 3 angeordnet ist (z.B. in Form von Permanentmagneten), auf. Es ist bevorzugt, wenn der Stator 2a des Motors 2 den Rotationsteil 3 umgibt. Der Rotor 2b des Motors 2 kann - an der Außenseite des Rotationsteils 3, vorzugsweise abnehmbar, angebrachte - Polele-mente, vorzugsweise in Form von Permanentmagneten, umfassen. Bevorzugt ist der Motor 2 ein Synchronmotor.

Der Spindelantrieb 1 weist auch Lager 37, 38 und 39 auf, mittels derer der Rotationsteil 3 relativ zum Gehäuse 13 drehbar gelagert ist.

Wie aus Fig. 1 zu sehen ist/sind zumindest eines - vorzugsweise zumindest zwei - der Lager 37 im Bereich des Spindelaustrittsendes 35 des Rotationsteils 3 angeordnet und/oder in Form eines radialen Lagers ausgebildet. Dabei handelt es sich vorzugsweise um ein Wälzlager, insbesondere ein Kugellager.

In der bevorzugten Ausführungsform der Fig. 1 ist das zumindest eine, im Bereich des Spindelaustrittsendes 35 des Rotationsteils 3 angeordnete Lager 37 innerhalb des Rotationsteils 3 - hier an einer Innenseite des Rotationsteils 3 - angeordnet. Es befindet sich zwischen der Innenseite des Rotationsteils 3 und einer in das Innere des Rotationsteils 3 ragenden Lageraufnahme 36, die an einem Gehäuseteil 13c, vorzugsweise einem stirnseitigen Gehäusedeckel, des Gehäuses 13 ausgebildet ist.

Aus Fig. 1 ist ebenfalls zu sehen, dass das zumindest eine, im Bereich des Spindelaustrittsendes 35 des Rotationsteils 3 angeordnete Lager 37 mit dem Stator 2a und/oder dem Rotor 2b des Motors 2 axial überlappend angeordnet ist. Mit anderen Worten: die Lager 37 sind innerhalb eines vom Stator 2a und/oder Rotor 2b des Motors 2 umschlossenen Bereichs angeordnet.

Im Bereich des - dem Spindelaustrittsende 35 gegenüberliegenden - Endes des Rotationsteiles 3 ist ein radiales Lager 39 angeordnet, durch welches der Rotationsteil relativ zum Gehäuseteil 13a gelagert ist.

Auch (ein) axiale(s) Lager 38 kann/können vorgesehen sein, vorzugsweise im Bereich zwischen dem Motor 2 und einer Bremseinrichtung 5.

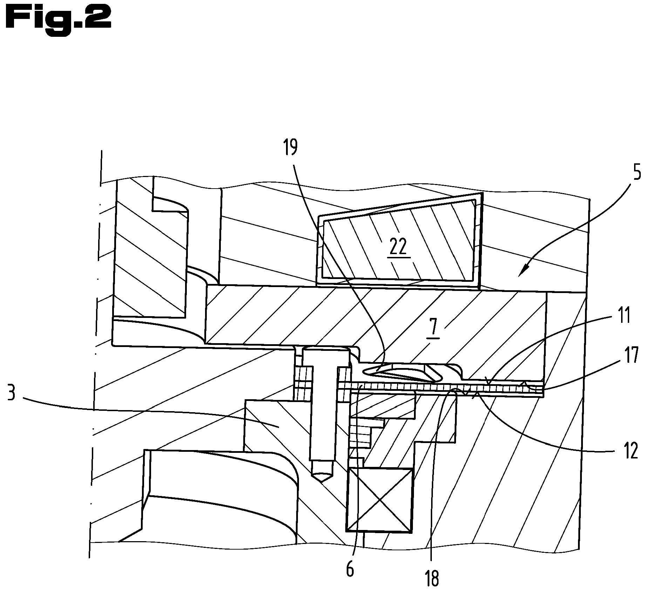

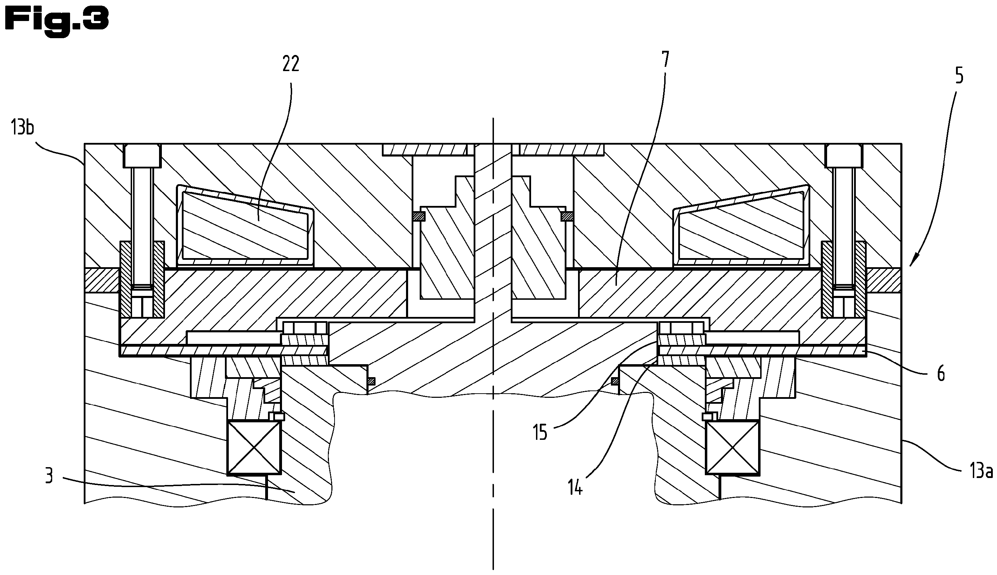

Der elektromechanische Antrieb 1 umfasst - in der dargestellten Ausführungsform - weiters eine zwischen einer Bremsstellung und einer gelösten Stellung betätigbare Bremseinrichtung 5, die im Bereich des - dem Spindelaustrittsende 35 gegenüberliegenden - Endes des Rotationsteils 3 angeordnet ist. Die Bremseinrichtung 5 weist eine mit dem Rotationsteil 3 mitdrehende Bremsscheibe 6 und ein in axialer Richtung verstellbares Bremselement 7, welches in der Bremsstellung auf die Bremsscheibe 6 einwirkt, auf (siehe auch Fig. 2 und 3).

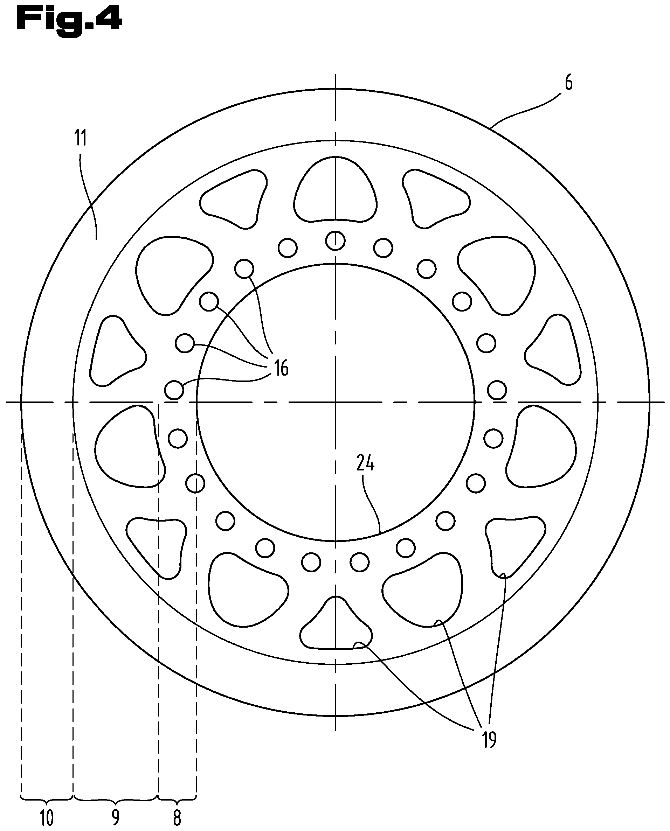

Aus Fig. 4 ist ersichtlich, dass die Bremsscheibe 6
- einen inneren Bereich 8,
- einen ringförmig um die Rotationsachse 4 verlaufenden Reibflächenbe-reich 10 mit einer ersten Reibfläche 11, die an einer ersten Seite der Bremsscheibe 6 ausgebildet ist, und
- einen Zwischenbereich 9, der zwischen dem Reibflächenbereich 10 und dem inneren Bereich 8 um die Rotationsachse 4 verläuft,
aufweisen kann.

An dem Bremselement 7 ist eine erste Gegenfläche 17 ausgebildet ist, die der ersten Reibfläche 11 zugewandt ist und in der Bremsstellung mit der ersten Reibfläche 11 zusammenwirkt.

Bevorzugt sind der Motor 2 und die Bremseinrichtung 5 in einem gemeinsamen Gehäuse 13 untergebracht.

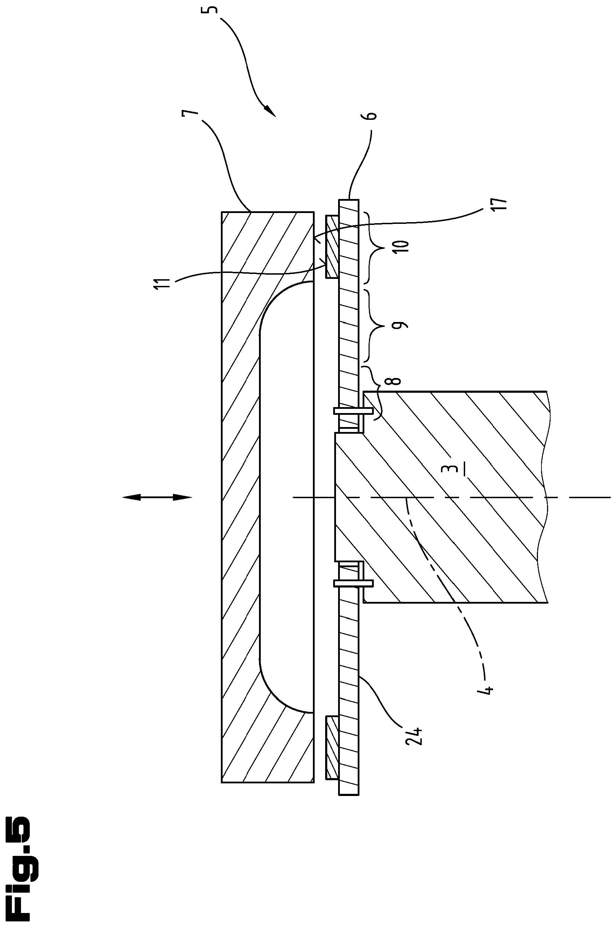

In der dargestellten bevorzugten Ausführungsform ist der Zwischenbereich 9 der Bremsscheibe 6 - sowohl in der gelösten Stellung als auch in der Bremsstellung - kontaktfrei zu dem Bremselement 7. In der Bremsstellung ist der Kontakt des Bremselementes 7 mit der Bremsscheibe 6 auf die erste Reibfläche 11 beschränkt (siehe Fig. 2, 7 und 9). Wie z.B. auch aus Fig. 5 hervorgeht können dabei die an die erste Gegenfläche 17 angrenzenden Bereiche des Bremselementes 7 hinter die Gegenfläche 17 zurückversetzt sein.

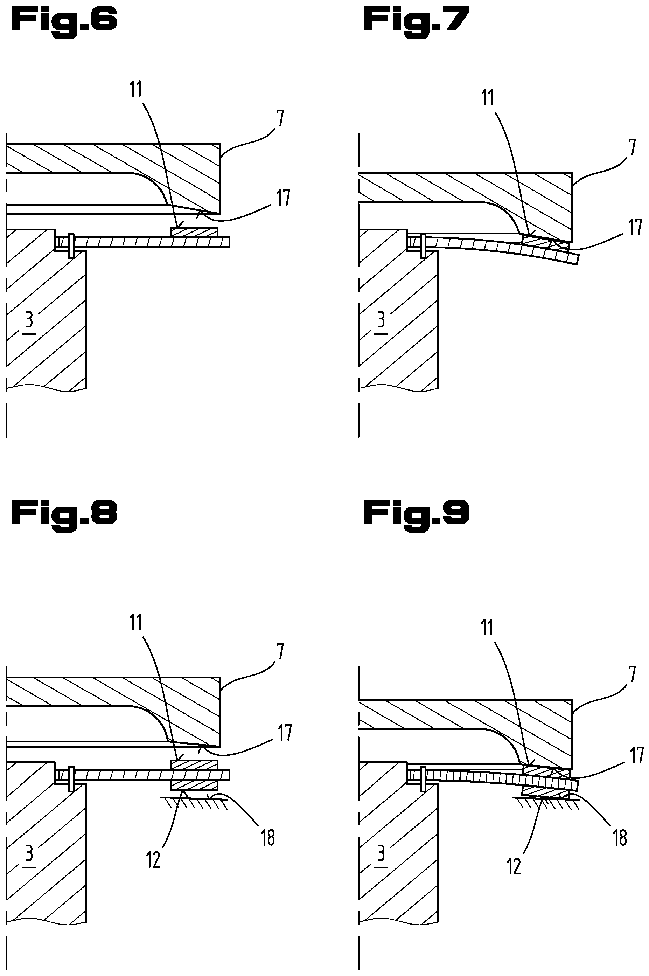

In der in Fig. 4 dargestellten bevorzugten Ausführungsform der Bremsscheibe 6 ist der Zwischenbereich 9 ein Verformungsbereich, der durch die Wirkung des Bremselementes 7 auf die Bremsscheibe 6 in axialer Richtung elastisch verformbar ist (siehe Fig. 7 und 9).

Im Verformungsbereich können - wie in Fig. 4 gezeigt - Ausschnitte 19, vorzugsweise in Form von Durchbrechungen, und/oder Materialschwächungen ausgebildet sein. Es ist bevorzugt, wenn im Verformungsbereich die Gesamtfläche der Ausschnitte 19 zumindest so groß ist wie die Gesamtfläche, die vom verbleibenden Material eingenommen wird.

Während die Ausführungsformen gemäß Fig. 5-7 nur eine erste Reib- und Gegenfläche aufweisen, zeigen die Varianten der Fig. 1-3 sowie Fig. 8 und 9, dass der Reibflächenbereich 10 eine zweite Reibfläche 12, die an der zweiten, der ersten Seite gegenüberliegenden Seite der Bremsscheibe 6 ausgebildet ist, aufweisen kann. Der Reibflächenbereich 10 der Bremsscheibe 6 ist zwischen der ersten Gegenfläche 17 und einer zweiten Gegenfläche 18, die der zweiten Reibfläche 12 zugewandt ist und in der Bremsstellung mit der zweiten Reibfläche 12 zusammenwirkt, angeordnet.

Die Bremsscheibe 6 weist einen scheibenförmigen Grundkörper 24 auf. Die erste Reibfläche 11 bzw. die zweite Reibfläche 12 werden jeweils durch einen vorzugsweise ringförmigen Bremsbelag gebildet, welcher auf dem Grundkörper 24 aufgebracht ist und/oder in axialer Richtung über den Grundkörper 26 vorsteht (Fig. 5-9).

Die erste Gegenfläche 17 und die zweite Gegenfläche 18 sind jeweils ringförmig ausgebildet. Denkbar wären auch mehrere unterbrochene, z.B. segmentartig angeordnete Gegenflächenbereiche.

Wie aus Fig. 4 deutlich zu sehen ist, ist der Reibflächenbereich 10 bevorzugt in der Peripherie der Bremsscheibe 6 angeordnet. Dabei kann die erste Reibfläche 11 und/oder die zweite Reibfläche 12 bis an den Außenrand der Bremsscheibe 6 reichen. Die Differenz zwischen dem Außenradius und dem Innenradius des Reibflächenbereiches 10 beträgt bevorzugt höchstens 1/3, vorzugsweise höchstens 1/4, des Außenradius der Bremsscheibe 6.

Fig. 1 und 3 zeigen, dass der elektromechanische Antrieb 1 ein (mehrteiliges) Gehäuse 13 aufweist. Die zweite Gegenfläche 18 kann dabei an einem Gehäuseteil 13a oder an einem mit dem Gehäuseteil 13a fest verbundenen Element ausgebildet sein. Auf diese Weise kann das Bremsmoment und die dabei entstehende Reibungswärme direkt in das Gehäuse eingeleitet werden.

In der in Fig. 4 dargestellten Ausführungsform weist der innere Bereich 8 der Bremsscheibe 6 mehrere - hier ringförmig angeordnete - Befestigungsschnittstellen 16, vorzugsweise in Form von Löchern, zur Befestigung der Bremsscheibe 6 an den Rotationsteil 3 auf. Dabei ist vorzugsweise die Anzahl der Befestigungsschnittstellen 16 größer als 10 und/oder größer als die Anzahl der Ausschnitte 19 im Verformungsbereich. Durch eine hohe Anzahl an Befestigungsschnittstellen kann eine besonders genaue Einstellung der Bremsscheibe relativ zu den Gegenflächen erfolgen.

In den Varianten der Fig. 6-9 weichen - in der gelösten Stellung der Bremseinrichtung 5 - die erste Reibfläche 11 und die erste Gegenfläche 17 von einer parallelen Ausrichtung ab. Ebenso könnte die zweite Reibfläche 12 und die zweite Gegenfläche 18 von einer parallelen Ausrichtung abweichen.

Bevorzugter Weise nimmt der Abstand zwischen der ersten Reibfläche 11 und der ersten Gegenfläche 17 in radialer Richtung ab, wobei vorzugsweise dieser Abstand an dem radial äußeren Rand der ersten Reibfläche 11 um höchstens 1mm, bevorzugt um höchstens 0,2mm, kleiner ist als an dem radial inneren Rand der ersten Reibfläche 11.

Ebenso kann der Abstand zwischen der zweiten Reibfläche 12 und der zweiten Gegenfläche 18 in radialer Richtung abnehmen, wobei vorzugsweise dieser Abstand an dem radial äußeren Rand der zweiten Reibfläche 12 um höchstens 1mm, bevorzugt um höchstens 0,2mm, kleiner ist als an dem radial inneren Rand der zweiten Reibfläche 12.

Die Reibflächen und Gegenflächen können zueinander geneigt sein. Auch können die Reibflächen und Gegenflächen in radialer Richtung einen gekrümmten Verlauf aufweisen.

Wie insbesondere aus den Figuren 1-3 hervorgeht kann der innere Bereich 8 der Bremsscheibe 6 an dem Rotationsteil 3 axial fixiert sein. In den dargestellten Ausführungsformen ist innere Bereich 8 der Bremsscheibe 6 mit dem Rotationsteil 3 überhaupt starr verbunden. Dies erfolgt hier mittels Schrauben, die durch die Löcher (Befestigungsschnittstellen 16; siehe Fig. 4) ragen und die Bremsscheibe gegen den Rotationsteil 3 drücken.

In der Ausführungsform der Fig. 3 ist zu sehen, dass zwischen dem inneren Bereich 8 der Bremsscheibe 6 und dem Rotationsteil 3 ein erster Distanzring 14 angeordnet ist. Der innere Bereich 8 der Bremsscheibe 6 ist zudem zwischen dem ersten Distanzring 14 und einem zweiten Distanzring 15 eingezwängt ist. Dies erfolgt mit denselben - weiter oben erwähnten - Schrauben, die die Bremsscheibe 7 mit dem Rotationsteil 3 fest verbinden.

In der dargestellten bevorzugten Variante ist der elektromechanische Antrieb 1 ein Spindelantrieb, wobei der Rotationsteil 3, mit dem die Bremsscheibe 6 verbunden ist, in Form einer Gewindemutter ausgebildet ist, welche mit der Spindel 23 des Spindelantriebs zusammenwirkt. Das untere Ende der Spindel 23 bewegt sich - bei Betätigung des Motors und Rotation der Gewindemutter (Rotationsteil 3) linear entlang der Rotationsachse 4 nach unten bzw. nach oben (Fig. 1).

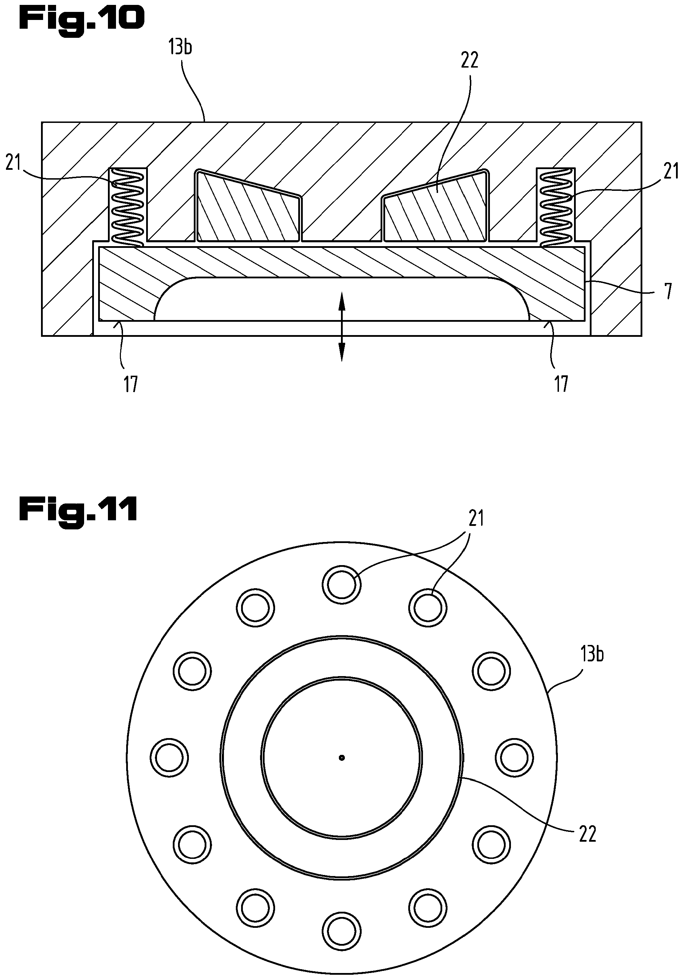

Das Bremselement 7 kann in Richtung Bremsstellung vorgespannt sein. Fig. 10 und 11 zeigen schließlich, dass das Bremselement 7 in Richtung Bremsstellung durch eine Vielzahl von Federn 21, die ringförmig und vorzugsweise mit der ersten Gegenfläche 17 überlappend angeordnet sind, vorgespannt ist.

Die Federn 21 können dabei in einem abnehmbaren Gehäuseteil 13b (z.B. in Form eines Deckels bzw. einer stirnseitigen Abdeckung) des elektromechanischen Antriebes 1 eingesetzt sein.

In den Fig. 1-3 und 10 ist zu sehen, dass die Bremseinrichtung 5 einen Aktor 22, vorzugsweise in Form eines Elektromagneten, umfasst, durch den das Bremselement 6 in die gelöste Stellung und/oder in die Bremsstellung bringbar ist. Der Aktor 22 kann - ebenso wie die federn 21 - in einem abnehmbaren Gehäuseteil 13b des elektromechanischen Antriebes 1 eingesetzt sein.

Aus Fig. 1 ist ersichtlich, dass der Spindelantrieb 1 ein Rollspindelantrieb sein kann, bei dem Rollelemente 45, insbesondere in Form von Kugeln, in einer Umlaufstrecke geführt sind. Ein erster Abschnitt der Umlaufstrecke ist zwischen dem Innengewinde des Rotationsteils 3 und dem Außengewinde der Spindel 23 und ein zweiter Abschnitt ist durch einen Rückführkanal 44 gebildet. Der Rückführkanal 44 ist in der dargestellten Ausführungsform im Inneren der Spindel 23 ausgebildet.

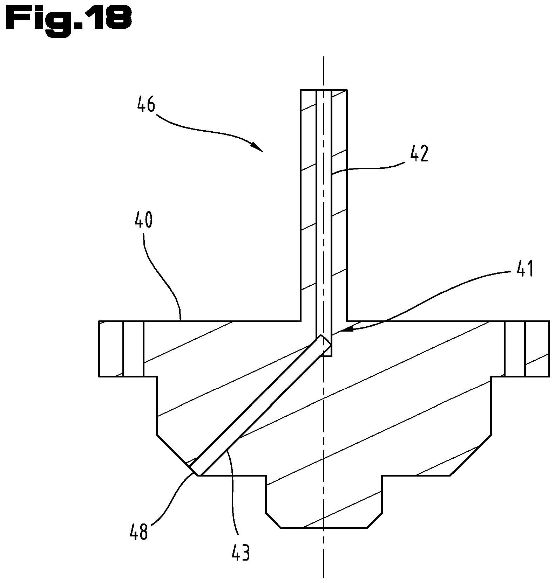

Fig. 1 und 18 zeigen, dass an dem - dem Spindelaustrittsende 35 gegenüberliegenden - Ende des Rotationsteils 3 ein Aufsatzteil 40 mit dem Rotationsteil 3 verbunden sein kann, wobei vorzugsweise der Aufsatzteil 40 einen innerhalb des Rotationsteils 3 befindlichen Abschnitt aufweist und/oder einen Anschlag für die Spindel 23 bildet. Ein außerhalb des Rotationsteils 3 befindlicher Abschnitt 46 des Aufsatzteiles 40 kann in Form eines Stiftes ausgebildet sein, wobei die Längsachse des stiftförmigen Abschnittes 46 mit der Rotationsachse 4 des Rotationsteiles 3 zusammenfällt. Der maximale Durchmesser des innerhalb des Rotationsteiles 3 befindlichen Abschnittes des Aufsatzteiles 40 ist bevorzugt zumindest 3 mal, vorzugsweise zumindest 4 mal, so groß ist wie der Durchmesser des stiftförmigen Abschnittes 46. Der außerhalb Rotationsteils 3 befindlicher Abschnitt 46 des Aufsatzteils 40 liegt im Erfassungsbereich einer Sensoreinrichtung 47, die vorzugsweise ein Drehgeber ist, der die Drehung des Aufsatzteils 40 erfasst.

In dem Aufsatzteil 40 kann ein Gleitmittelkanal 41 zum Zuführen von Gleitmittel in das Innere des Rotationsteils 3 ausgebildet sein. Der Verlauf eines ersten Abschnittes 42 des Gleitmittelkanals 41 - vorzugsweise in einem außerhalb des Rotationsteils 3 befindlichen Abschnitt 46 des Aufsatzteiles 40 - kann mit der Rotationsachse 4 des Rotationsteils 3 fluchten.

Der Verlauf eines zweiten Abschnittes 43 des Gleitmittelkanals 41 weist eine - bezüglich der Rotationsachse 4 - radiale Komponente auf und/oder ist schräg zur Rotationsachse 4 (Fig. 1 und 18). Der zweite Abschnitt 43 des Gleitmittelkanals 41 verläuft in einem innerhalb des Rotationsteils 3 befindlichen Abschnitt des Aufsatzteiles 40 bzw. endet an einer Austrittsstelle 48, die - bezüglich der Rotationsachse 4 - in einem peripheren Bereich des Aufsatzteiles 40 angeordnet ist.

Der Aufsatzteil 40 ist in der dargestellten Ausführungsform von der Bremseinrichtung 5 des Spindelantriebes 1 umgeben. Dabei kann der Aufsatzteil 40 innerhalb einer zentralen Ausnehmung der Bremsscheibe 6 liegen und sogar eine vorzugsweise formschlüssige Aufnahme für die Bremsscheibe 6 bildet und somit eine Zentrierfunktion für die Bremsscheibe ausüben.

An der Außenseite des Gehäuses 13 - zumindest im Bereich des Motors 2 - können (z.B. abnehmbare) Kühlrippen 49 angeordnet sein.

Der Spindelantrieb 1 kann modular aufgebaut sein, wodurch auch zur Herstellung und/oder Adaption von Spindelantrieben ein Spindelantrieb-Bauteileset bereitgestellt werden kann. Ein solches Bauteileset umfasst Bauteile für mehrere elektro-mechanische Spindelantriebe 1. Es weist Bauteile verschiedener Art auf und die Bauteile weisen Verbindungsschnittstellen zur Verbindung der Bauteile untereinander auf. Bauteile derselben Art weisen verschiedene Größen auf, wobei die Verbindungsschnittstellen verschieden großer Bauteile derselben Art gleich dimensioniert sind.

In einem Beispiel umfasst das Bauteileset
- erste Gehäuseteile unterschiedlicher Länge und/oder Breite und
- zweite Gehäuseteile unterschiedlicher Länge und/oder Breite
auf, wobei die Verbindungsschnittstellen der ersten Gehäuseteile zur Verbindung mit den zweiten Gehäuseteilen bei allen ersten Gehäuseteilen und bei allen zweiten Gehäuseteilen gleich dimensioniert sind.

In einem Beispiel umfasst das Bauteileset
- Rotationsteile unterschiedlicher Länge und/oder Breite und
- Gehäuseteile unterschiedlicher Länge und/oder Breite und/oder Motoren unterschiedlicher Länge und/oder Breite
auf, wobei die Verbindungsschnittstellen der Rotationsteile zur Verbindung mit den Gehäuseteilen und/oder Motoren bei allen Rotationsteilen gleich dimensioniert sind und/oder wobei die Verbindungsschnittstellen der Gehäuseteilen und/oder Motoren zur Verbindung mit den Rotationsteilen bei allen Gehäuseteilen und/oder Motoren gleich dimensioniert sind.

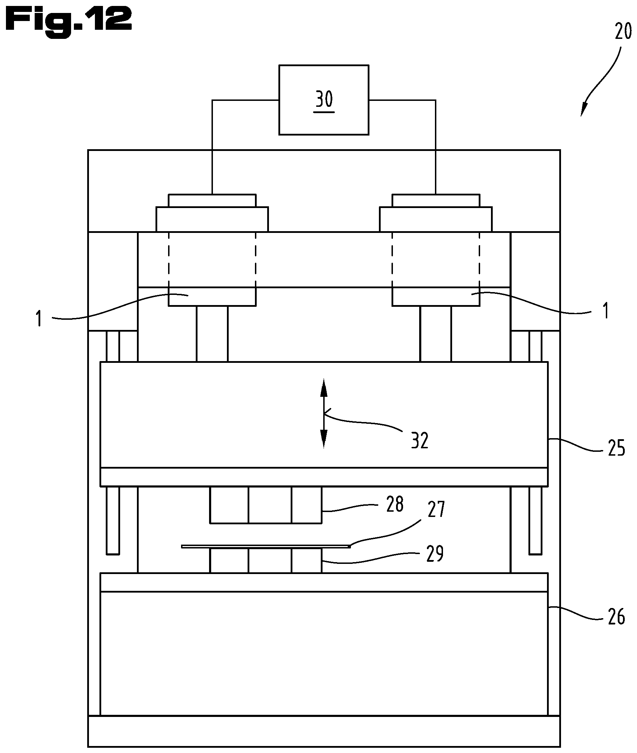

Fig. 12 zeigt schließlich eine Umformmaschine 20 in Form einer Biegepresse, mit zumindest einem Antrieb für die Arbeitsbewegung (eines Umformwerkzeuges), insbesondere Pressantrieb. Der Antrieb bzw. die Antriebe sind dabei als elektromechanische(r) Antrieb(e) 1 gemäß Erfindung ausgebildet. Eine solche Umformmaschine kann einen ersten (z.B. oberen) Werkzeugträger 25 (zum Halten zumindest eines ersten Umformwerkzeuges 28) und einen zweiten (z.B. unteren) Werkzeugträger 26 (zum Halten zumindest eines zweiten Umformwerkzeuges 29) umfassen, deren Relativbewegung die Arbeitsbewegung ist. Dabei kann - wie in Fig. 12 dargestellt - der zweite Werkzeugträger 26 stationär sein, während der erste Werkzeugträger 25 durch den/die Antrieb(e) 1 bewegbar ist. Der oben beschriebene elektromechanische Antrieb eignet sich besonders gut für den Einsatz in einer Biegemaschine, da die vorgeschlagene Bremseinrichtung besonders schnell reagiert und damit insbesondere das Bedienpersonal zuverlässig geschützt (insbesondere in Fällen, in denen eine Abschaltung oder ein Stopp/Verlangsamung der Arbeitsbewegung für die Sicherheit relevant ist) aber auch Werkstücke vor falschen bzw. fehlerbehafteten Bearbeitungsroutinen "geschützt" werden.

Fig. 12 zeigt eine Umformmaschine (in Form einer Biegemaschine) zum Umformen (Biegen) eines, vorzugsweise plattenförmigen, Werkstückes 27. Die Umformmaschine 20 umfasst zumindest einen - eine elektrische Antriebsquelle 2 aufweisenden - elektromechanischen Antrieb 1, welcher in der Ausführungsform gemäß Fig. 12 einen Pressantrieb darstellt.

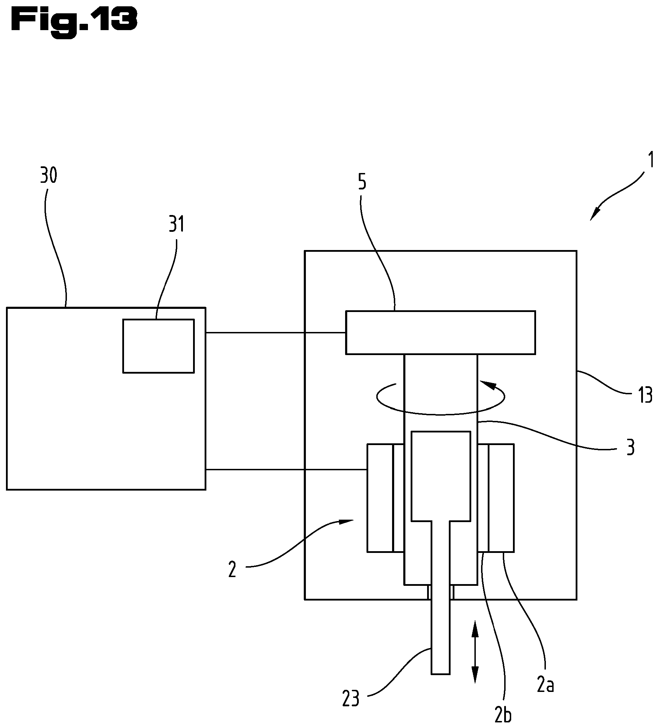

Die Umformmaschine umfasst zumindest ein Umformwerkzeug 28, dessen Arbeitsbewegung 32 durch den elektromechanischen Antrieb 1 bewirkt wird, und zumindest eine zwischen einer gelösten Stellung und einer Bremsstellung betätigbare Bremseinrichtung 5 zum Bremsen und/oder Blockieren der Arbeitsbewegung 32 des Umformwerkzeuges 28 (siehe Fig. 13).

Bei einem Verfahren zum Umformen eines, vorzugsweise plattenförmigen, Werkstückes 27 mit einer Umformmaschine 20, wird der Motor 2 des elektromechanischen Spindelantriebes 1 und/oder die Bremseinrichtung 5 zum Umformen des Werkstückes 27 durch eine Steuereinrichtung 30 angesteuert.

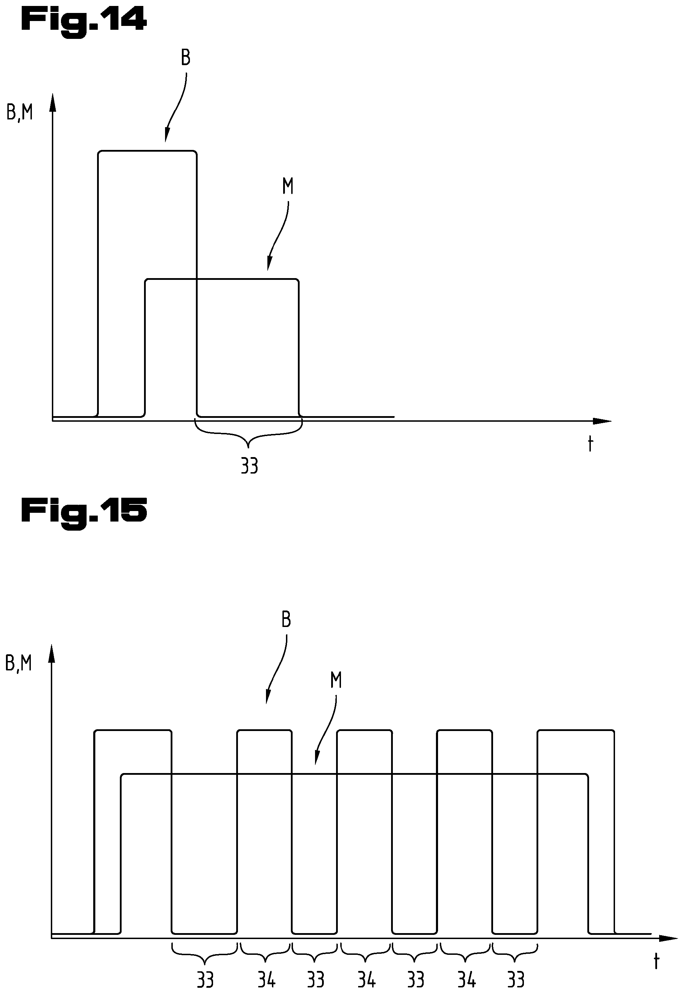

In den Fig. 14 und 15 sind nun bevorzugte Verfahren zum Umformen eines Werkstückes 17 schematisch dargestellt. In Fig. 14 ist zu sehen, dass vor einer Bewegungsphase 33 des Umformwerkzeuges 28 die elektrische Antriebsquelle 2 ein Antriebsmoment M generiert, während die Bremseinrichtung 5 in der Bremsstellung ist, sodass das Bremsmoment B der Bremseinrichtung 5 dem Antriebsmoment M der elektrischen Antriebsquelle 2 entgegenwirkt. Der Beginn der Bewegungsphase 33 des Umformwerkzeuges 28 wird durch Überführen der Bremseinrichtung 5 in die gelöste Stellung und/oder in eine Stellung mit verringertem Bremsmoment ausgelöst.

In Fig. 15 ist zusätzlich zu sehen, dass während eines Umformschrittes die Arbeitsbewegung 32 des Umformwerkzeuges 28 intermittierend erfolgt.

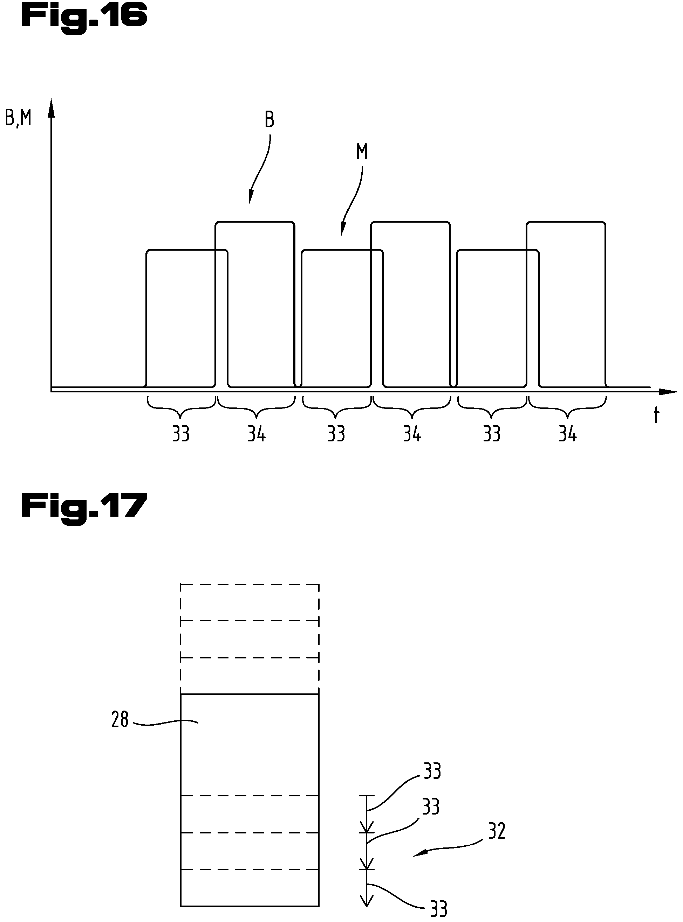

Die einzelnen Bewegungsphasen 33 der Arbeitsbewegung 32 des Umformwerkzeuges 28 sind in Fig. 17 schematisch dargestellt. Der sich der während einer intermittierenden Arbeitsbewegung 32 zurückgelegte Weg des Umformwerkzeuges 28 setzt sich aus den während der einzelnen Bewegungsphasen 33 der intermittierenden Arbeitsbewegung 32 zurückgelegten Wegabschnitten zusammen. Hier ist auch zu sehen, dass die Bewegungsrichtung des Umformwerkzeuges 28 in den einzelnen Bewegungsphasen 33 einer intermittierenden Arbeitsbewegung 32 unverändert bleiben kann.

Fig. 16 zeigt schließlich eine Variante, bei der auch das Antriebsmoment M der elektrischen Antriebsquelle 2 intermittierend generiert wird, um eine intermittierende Arbeitsbewegung zu erreichen.

Die Arbeitsbewegung 32 des Umformwerkzeuges 28 umfasst während eines Umformschrittes vorzugsweise mehrere Bewegungsphasen 33, wobei die Bewegungsphasen 33 unterbrochen sind durch Phasen 34, in denen das Umformwerkzeug 28 stillsteht oder mit geringerer Geschwindigkeit als in der Bewegungsphase 33 bewegt wird. Bevorzugt beträgt jeweils die Länge einer einzelnen Bewegungsphase 33 weniger als 3 Sekunden, bevorzugt weniger als 1,5 Sekunden. Bevorzugt beträgt jeweils die Länge einer Phase 34, in denen das Umformwerkzeug 28 stillsteht oder mit geringerer Geschwindigkeit als in der Bewegungsphase 33 bewegt wird, weniger als 3 Sekunden, bevorzugt weniger als 1,5 Sekunden. Dadurch kann z.B. eine "hämmernde" Einwirkung des Umformwerkzeuges 28 auf das Werkstück 27 erreicht werden.

Aus der Variante gemäß Fig. 15 ist zu sehen, dass eine intermittierende Arbeitsbewegung des Umformwerkzeuges 28 durch eine intermittierende Betätigung der Bremseinrichtung 5 zwischen gelöster Stellung und Bremsstellung bewirkt wird. Das auf den Rotationsteil 3 wirkende Bremsmoment B kann - während jener Phasen der intermittierenden Betätigung der Bremseinrichtung 5, in denen sich die Bremseinrichtung 5 in der Bremsstellung befindet - höher sein als das auf den Rotationsteil 3 wirkende Antriebsmoment M. In diesem Fall führt die Betätigung der Bremseinrichtung 5 zu einem (kurzzeitigen) Stoppen des Umformwerkzeuges 28.

Die elektrische Antriebsquelle 2 kann auch während jener Phasen der intermittierenden Betätigung der Bremseinrichtung 5, in denen sich die Bremseinrichtung 5 in der Bremsstellung befindet, ein Antriebsmoment M generieren. Z.B. kann das Antriebsmoment M während eines Umformschrittes mit intermittierender Arbeitsbewegung 32 des Umformwerkzeuges 28 im Wesentlichen konstant gehalten werden.

Aus Fig. 13 - sowie aus den später im Detail beschriebenen bevorzugten Ausführungsformen der Fig. 1 bis 9 - ist ersichtlich , dass der elektromechanische Antrieb 1 einen Rotationsteil 3 umfasst und die Bremseinrichtung 5 auf den Rotationsteil 3 wirkt. Die elektrische Antriebsquelle 2, welche durch einen Motor gebildet sein kann, wirkt mit ihrem Antriebsmoment M ebenfalls auf den Rotationsteil 3.

Im Falle eines elektrischen Motors kann die Antriebsquelle 2 einen Stator 2a, der z.B. mit dem Gehäuse 13 verbunden ist und/oder relativ zum Gehäuse 13 stationär ist, und einen Rotor 2b, der z.B. mit dem Rotationsteil 3 verbunden ist oder direkt am Rotationsteil 3 angeordnet ist, umfassen. Entsprechende Versorgungs- und/oder Steuerleitungen führen zu der elektrischen Antriebsquelle 2.

Wie später noch am Beispiel eines Spindelantriebes näher beschrieben kann der elektromechanische Antrieb 1 einen Übertragungsmechanismus, insbesondere ein Lineargetriebe, umfassen, der die Rotation des Rotationsteils 3 in eine lineare Bewegung eines Übertragungselementes 23, welches direkt oder indirekt auf das Umformwerkzeug 28 wirkt, umwandelt werden. Das Übertragungselement 23 kann z.B. in Form einer Spindel oder einer Zahnstange (auf die ein rotierendes Zahnrad wirkt) ausgebildet sein.

Die Bremseinrichtung 5 ist - wie in Fig. 13 dargestellt vorzugsweise - in dem elektromechanischen Antrieb 1 integriert. Die elektrische Antriebsquelle 2 und die Bremseinrichtung 5 können in demselben Gehäuse 13 untergebracht sein.

Fig. 13 zeigt auch eine Steuereinrichtung 30 der Umformmaschine 20 zur Steuerung der elektrischen Antriebsquelle 2 und der Bremseinrichtung 5. In der Steuereinrichtung 30 ist ein Betriebsmodus 31 hinterlegt, durch den die elektrische Antriebsquelle 2 und die Bremseinrichtung 5 derart ansteuerbar sind, dass die oben beschriebenen Verfahren ausgeführt werden können. Das Zusammenspiel zwischen Antriebsquelle 2 und Bremseinrichtung 5 wurde bereits oben ausführlich beschrieben. Das (Entgegen-)Wirken von Antriebsmoment M und Bremsmoment B ermöglicht die in der Beschreibungseinleitung erwähnten Vorteile.

**Bezugszeichenaufstellung**

| | | | |
|---|---|---|---|
| | | 39 | radiales Lager |
| 1 | elektromechanischer Antrieb | 40 | Aufsatzteil |
| 2 | Motor | 41 | Gleitmittelkanal |
| 2a | Stator | 42 | erster Abschnitt des Gleitmittelkanals |
| 2b | Rotor | | |
| 3 | Rotationsteil | 43 | zweiter Abschnitt des Gleitmittelkanals |
| 4 | Rotationsachse | | |
| 5 | Bremseinrichtung | 44 | Rückführkanal |
| 6 | Bremsscheibe | 45 | Rollelemente |
| 7 | Bremselement | 46 | stiftförmiger Abschnitt |
| 8 | innerer Bereich | 47 | Sensoreinrichtung |
| 9 | Zwischenbereich | 48 | Austrittsstelle |
| 10 | Reibflächenbereich | 49 | Kühlrippe |
| 11 | erste Reibfläche | B | Bremsmoment |
| 12 | zweite Reibfläche | M | Antriebsmoment |
| 13 | Gehäuse | | |
| 13a | Gehäuseteil | | |
| 13b | Gehäuseteil | | |
| 13c | Gehäuseteil | | |
| 14 | erster Distanzring | | |
| 15 | zweiter Distanzring | | |
| 16 | Befestigungsschnittstelle | | |
| 17 | erste Gegenfläche | | |
| 18 | zweite Gegenfläche | | |
| 19 | Ausschnitte | | |
| 20 | Umformmaschine | | |
| 21 | Feder | | |
| 22 | Aktor | | |
| 23 | Spindel | | |
| 24 | Grundkörper | | |
| 25 | erste Werkzeugträger | | |
| 26 | zweite Werkzeugträger | | |
| 27 | Werkstück | | |
| 28 | Umformwerkzeug | | |
| 29 | Umformwerkzeug | | |
| 30 | Steuereinrichtung | | |
| 31 | Betriebsmodus | | |
| 32 | Arbeitsbewegung | | |
| 33 | Bewegungsphase | | |
| 34 | Phase | | |
| 35 | Spindelaustrittsende | | |
| 36 | Lageraufnahme | | |
| 37 | Lager im Bereich des Spindelaustrittsendes | | |
| 38 | axiales Lager | | |

## Patentansprüche

1. Elektromechanischer Spindelantrieb (1) umfassend
- ein Gehäuse (13),
- einen Motor (2),
- einen Rotationsteil (3) in Form einer Spindelmutter, wobei der Rotationsteil (3) durch den Motor (2) um eine Rotationsachse (4) in Rotation versetzbar ist,
- eine mit dem Rotationsteil (3) zusammenwirkende Spindel (23), deren Gewindeabschnitt innerhalb des Rotationsteils (3) angeordnet ist und die an einem Spindelaustrittsende (35) aus dem Rotationsteil (3) austritt, und
- Lager (37, 38, 39), mittels derer der Rotationsteil (3) relativ zum Gehäuse (13) drehbar gelagert ist,
wobei zumindest eines - vorzugsweise zumindest zwei - der Lager (37) im Bereich des Spindelaustrittsendes (35) des Rotationsteils (3) angeordnet ist/sind, **dadurch gekennzeichnet, dass** das zumindest eine, im Bereich des Spindelaustrittsendes (35) des Rotationsteils (3) angeordnete Lager (37) innerhalb des Rotationsteils (3), vorzugsweise an einer Innenseite des Rotationsteils (3), angeordnet ist.

2. Elektromechanischer Spindelantrieb nach Anspruch 1, **dadurch gekennzeichnet, dass** das zumindest eine, im Bereich des Spindelaustrittsendes (35) des Rotationsteils (3) angeordnete Lager (37) in Form eines radialen Lagers ausgebildet ist.

3. Elektromechanischer Spindelantrieb nach Anspruch 1 oder 2, **dadurch gekennzeichnet, dass** das zumindest eine, im Bereich des Spindelaustrittsendes (35) des Rotationsteils (3) angeordnete Lager (37) zwischen der Innenseite des Rotationsteils (3) und einer in das Innere des Rotationsteils (3) ragenden Lageraufnahme (36) angeordnet ist, wobei vorzugsweise die Lageraufnahme (36) an einem Gehäuseteil (13c), vorzugsweise einem stirnseitigen Gehäusedeckel, des Gehäuses (13) ausgebildet ist.

4. Elektromechanischer Spindelantrieb nach einem der vorhergehenden Ansprüche, **dadurch gekennzeichnet, dass** das zumindest eine, im Bereich des Spindelaustrittsendes (35) des Rotationsteils (3) angeordnete Lager (37) innerhalb eines vom Stator (2a) und/oder Rotor (2b) des Motors (2) umschlossenen Bereichs angeordnet ist.

5. Elektromechanischer Spindelantrieb nach einem der vorhergehenden Ansprüche, **dadurch gekennzeichnet, dass** der Stator (2a) des Motors (2) den Rotationsteil (3) umgibt und/oder dass der Rotor (2b) des Motors (2) - an der Außenseite des Rotationsteils (3), vorzugsweise abnehmbar, angebrachte - Polelemente umfasst.

6. Elektromechanischer Spindelantrieb nach einem der vorhergehenden Ansprüche, **dadurch gekennzeichnet, dass** der Spindelantrieb (1) ein Rollspindelantrieb ist, bei dem Rollelemente (45), insbesondere in Form von Kugeln, in einer Umlaufstrecke geführt sind, wobei ein erster Abschnitt der Umlaufstrecke zwischen dem Innengewinde des Rotationsteils (3) und dem Außengewinde der Spindel (23) und ein zweiter Abschnitt durch einen Rückführkanal (44) gebildet ist, wobei der Rückführkanal (44) im Inneren der Spindel (23) ausgebildet ist.

7. Elektromechanischer Spindelantrieb nach einem der vorhergehenden Ansprüche, **dadurch gekennzeichnet, dass** an dem - dem Spindelaustrittsende (35) gegenüberliegenden - Ende des Rotationsteils (3) ein Aufsatzteil (40) mit dem Rotationsteil (3) verbunden ist, wobei vorzugsweise der Aufsatzteil (40) einen innerhalb des Rotationsteils (3) befindlichen Abschnitt aufweist und/oder einen Anschlag für die Spindel (23) bildet.

8. Elektromechanischer Spindelantrieb nach Anspruch 7, **dadurch gekennzeichnet, dass** ein außerhalb des Rotationsteils (3) befindlicher Abschnitt (46) des Aufsatzteiles (40) in Form eines Stiftes ausgebildet ist, wobei die Längsachse des stiftförmigen Abschnittes (46) mit der Rotationsachse (4) des Rotationsteiles (3) zusammenfällt, wobei vorzugsweise der maximale Durchmesser des innerhalb des Rotationsteiles (3) befindlichen Abschnittes des Aufsatzteiles (40) zumindest 3 mal, vorzugsweise zumindest 4 mal, so groß ist wie der Durchmesser des stiftförmigen Abschnittes (46).

9. Elektromechanischer Spindelantrieb nach Anspruch 7 oder 8, **dadurch gekennzeichnet, dass** der Spindelantrieb (1) eine Sensoreinrichtung (47) umfasst, wobei ein außerhalb Rotationsteils (3) befindlicher Abschnitt (46) des Aufsatzteils (40) im Erfassungsbereich der Sensoreinrichtung (47) liegt, wobei vorzugsweise die Sensoreinrichtung (47) ein Drehgeber ist, der die Drehung des Aufsatzteils (40) erfasst.

10. Elektromechanischer Spindelantrieb nach einem der Ansprüche 7 bis 9, **dadurch gekennzeichnet, dass** in dem Aufsatzteil (40) ein Gleitmittelkanal (41) zum Zuführen von Gleitmittel in das Innere des Rotationsteils (3) ausgebildet ist.

11. Elektromechanischer Spindelantrieb nach Anspruch 10, **dadurch gekennzeichnet, dass** der Verlauf eines ersten Abschnittes (42) des Gleitmittelkanals (41) mit der Rotationsachse (4) des Rotationsteils (3) fluchtet, wobei vorzugsweise der erste Abschnitt (42) des Gleitmittelkanals (41) in einem außerhalb des Rotationsteils (3) befindlichen Abschnitt (46) des Aufsatzteiles (40) verläuft,
und/oder dass der Verlauf eines zweiten Abschnittes (43) des Gleitmittelkanals (41) eine - bezüglich der Rotationsachse (4) - radiale Komponente aufweist und/oder schräg zur Rotationsachse (4) ist, wobei vorzugsweise der zweite Abschnitt (43) des Gleitmittelkanals (41) in einem innerhalb des Rotationsteils (3) befindlichen Abschnitt des Aufsatzteiles (40) verläuft und/oder an einer Austrittsstelle (48), die - bezüglich der Rotationsachse (4) - in einem peripheren Bereich des Aufsatzteiles (40) angeordnet ist, endet.

12. Elektromechanischer Spindelantrieb nach einem der Ansprüche 7 bis 11, **dadurch gekennzeichnet, dass** der Aufsatzteil (40) von einer Bremseinrichtung (5) des Spindelantriebes (1) umgeben ist, wobei vorzugsweise der Aufsatzteil (40) innerhalb einer zentralen Ausnehmung einer Bremsscheibe (6) der Bremseinrichtung (5) liegt und/oder eine vorzugsweise formschlüssige Aufnahme für eine Bremsscheibe (6) der Bremseinrichtung (5) bildet.

13. Spindelantrieb-Bauteileset umfassend Bauteile für mehrere elektromechanische Spindelantriebe (1) nach einem der vorhergehenden Ansprüche, **dadurch gekennzeichnet, dass** das Bauteileset Bauteile verschiedener Art aufweist und die Bauteile Verbindungsschnittstellen zur Verbindung der Bauteile untereinander aufweisen, und dass Bauteile derselben Art verschiedene Größen aufweisen, wobei die Verbindungsschnittstellen verschieden großer Bauteile derselben Art gleich dimensioniert sind.

14. Spindelantrieb-Bauteileset nach Anspruch 13, **dadurch gekennzeichnet, dass** das Bauteileset
- Rotationsteile unterschiedlicher Länge und/oder Breite und
- Gehäuseteile unterschiedlicher Länge und/oder Breite und/oder Motoren unterschiedlicher Länge und/oder Breite
aufweist,
wobei die Verbindungsschnittstellen der Rotationsteile zur Verbindung mit den Gehäuseteilen und/oder Motoren bei allen Rotationsteilen gleich dimensioniert sind
und/oder wobei die Verbindungsschnittstellen der Gehäuseteilen und/oder Motoren zur Verbindung mit den Rotationsteilen bei allen Gehäuseteilen und/oder Motoren gleich dimensioniert sind.

15. Umformmaschine (20), insbesondere Biegemaschine, zum Umformen eines, vorzugsweise plattenförmigen, Werkstückes (27),
wobei die Umformmaschine (20)
- zumindest einen elektromechanischen Antrieb (1),
- zumindest ein Umformwerkzeug (28), dessen Arbeitsbewegung durch den elektromechanischen Antrieb (1) bewirkt wird,
umfasst, **dadurch gekennzeichnet, dass** der elektromechanische Antrieb (1) ein Spindelantrieb nach einem der Ansprüche 1 bis 12 ist.

16. Verfahren zum Umformen eines, vorzugsweise plattenförmigen, Werkstückes (27) mit einer Umformmaschine (20), insbesondere einer Biegemaschine, **dadurch gekennzeichnet**, die Umformmaschine (20) eine Umformmaschine nach Anspruch 15 ist und dass der Motor (2) des elektromechanischen Spindelantriebes (1) zum Umformen des Werkstückes (27) durch eine Steuereinrichtung (30) angesteuert wird.

## Claims

1. An electromechanical spindle drive (1) comprising
- a housing (13),
- a motor (2),
- a rotational part (3) in the form of a spindle nut, said rotational part (3) being rotatable by the motor (2) about a rotational axis (4),
- a spindle (23) which interacts with the rotational part (3), the threaded section of which is arranged within the rotational part (3) and which exits the rotational part (3) at a spindle outlet end (35), and
- bearings (37, 38, 39) by means of which the rotational part (3) is rotatably mounted relative to the housing (13),
wherein at least one, preferably at least two of the bearings (37), are arranged in the region of the spindle outlet end (35) of the rotational part (3), **characterized in that** the at least one bearing (37) arranged in the region of the spindle outlet end (35) of the rotational part (3) is arranged inside the rotational part (3), preferably on an inner side of the rotational part (3).

2. The electromechanical spindle drive according to claim 1, **characterised in that** the at least one bearing (37) arranged in the region of the spindle outlet end (35) of the rotational part (3) is designed in the form of a radial bearing.

3. The electromechanical spindle drive according to claim 1 or 2, **characterised in that** the at least one bearing (37) arranged in the region of the spindle outlet end (35) of the rotational part (3) is arranged between the inside of the rotational part (3) and a bearing seat (36) projecting into the interior of the rotational part (3), wherein preferably the bearing seat (36) is formed on a housing part (13c), preferably an end-face housing cover, of the housing (13).

4. The electromechanical spindle drive according to one of the preceding claims, **characterised in that** the at least one bearing (37) arranged in the region of the spindle outlet end (35) of the rotational part (3) is arranged within an area enclosed by the stator (2a) and/or rotor (2b) of the motor (2).

5. The electromechanical spindle drive according to one of the preceding claims, **characterised in that** the stator (2a) of the motor (2) surrounds the rotational part (3) and/or that the rotor (2b) of the motor (2) comprises pole elements mounted on the outside of the rotational part (3), preferably in a removable manner.

6. The electromechanical spindle drive according to one of the preceding claims, **characterised in that** the spindle drive (1) is a rolling spindle drive in which rolling elements (45), in particular in the form of balls, are guided in a circulating path, a first portion of the circulating path being formed between the internal thread of the rotational part (3) and the external thread of the spindle (23) and a second portion being formed by a return channel (44), the return channel (44) being formed in the interior of the spindle (23).

7. The electromechanical spindle drive according to one of the preceding claims, **characterised in that** at the end of the rotational part (3) opposite the spindle outlet end (35), an attachment part (40) is connected to the rotational part (3), preferably the attachment part (40) having a portion located inside the rotational part (3) and/or forming a stop for the spindle (23).

8. The electromechanical spindle drive according to claim 7, **characterised in that** a portion (46) of the attachment part (40) located outside the rotational part (3) is formed in the shape of a pin, wherein the longitudinal axis of the pin-shaped portion (46) coincides with the rotational axis (4) of the rotational part (3), wherein preferably the maximum diameter of the portion of the attachment part (40) located inside the rotational part (3) is at least 3 times, preferably at least 4 times, as large as the diameter of the pin-shaped section (46)

9. The electromechanical spindle drive according to claim 7 or 8, **characterised in that** the spindle drive (1) comprises a sensor device (47), wherein a portion (46) of the attachment part (40) located outside the rotation part (3) is disposed in the detection range of the sensor device (47), wherein preferably the sensor device (47) is a rotary encoder which detects the rotation of the attachment part (40).

10. The electromechanical spindle drive according to any one of claims 7 to 9, **characterised in that** a lubricant channel (41) is configured in the attachment part (40) for supplying lubricant to the interior of the rotational part (3).

11. The electromechanical spindle drive according to claim 10, **characterised in that** the path of a first portion (42) of the lubricant channel (41) is aligned with the rotational axis (4) of the rotational part (3), preferably the first portion (42) of the lubricant channel (41) running in a portion (46) of the attachment part (40) located outside the rotational part (3),
and/or that the path of a second portion (43) of the lubricant channel (41) has a radial component with respect to the rotational axis (4) and/or is oblique to the rotational axis (4), wherein preferably the second portion (43) of the lubricant channel (41) runs in a portion of the attachment part (40) located inside the rotational part (3) and/or ends at an exit point (48), which, with respect to the rotational axis (4), is arranged in a peripheral region of the attachment part (40).

12. The electromechanical spindle drive according to any one of claims 7 to 11, **characterised in that** the attachment part (40) is surrounded by a braking device (5) of the spindle drive (1), wherein preferably the attachment part (40) is disposed within a central recess of a brake disc (6) of the braking device (5) and/or forms a preferably positive receptacle for a brake disc (6) of the braking device (5).

13. A spindle drive component set comprising components for a plurality of electromechanical spindle drives (1) according to one of the preceding claims, **characterised in that** the component set has components of different types and the components have connection interfaces for connecting the components to one another, and **in that** components of the same type have different sizes, wherein the connection interfaces of differently sized components of the same type are of the same dimensions.

14. The spindle drive component set according to claim 13, **characterised in that** the component set has
- rotational parts of different length and/or width, and
- housing parts of different length and/or width and/or motors of different length and/or width,
wherein the connection interfaces of the rotational parts for connection to the housing parts and/or motors have the same dimensions for all rotational parts,
and/or wherein the connection interfaces of the housing parts and/or motors for connection to the rotational parts have the same dimensions for all housing parts and/or motors.

15. A forming machine (20), in particular a bending machine, for forming a preferably plate-type workpiece (27),
wherein the forming machine (20) comprises
- at least one electromechanical drive (1),
- at least one forming tool (28) whose working movement is effected by the electromechanical drive (1),
**characterised in that** the electromechanical drive (1) is a spindle drive according to one of claims 1 to 12.

16. Method for forming a preferably plate-type workpiece (27) with a forming machine (20), in particular a bending machine, **characterised in that** the forming machine (20) is a forming machine according to claim 15 and that the motor (2) of the electromechanical spindle drive (1) for forming the workpiece (27) is controlled by a control device (30).

## Revendications

1. Entraînement électromécanique à broche (1) comprenant
- un boîtier (13),
- un moteur (2),
- une partie rotative (3) sous la forme d'un écrou de broche, la partie rotative (3) pouvant être mise en rotation par le moteur (2) autour d'un axe de rotation (4),
- une broche (23) coopérant avec la partie rotative (3), dont la partie filetée est agencée à l'intérieur de la partie rotative (3) et qui sort de la partie rotative (3) à une extrémité de sortie de broche (35), et
- des paliers (37, 38, 39) au moyen desquels la partie rotative (3) est montée de manière rotative par rapport au boîtier (13),
au moins un (de préférence au moins deux) des paliers (37) étant agencé dans la zone de l'extrémité de sortie de broche (35) de la partie rotative (3), **caractérisé en ce que** l'au moins un palier (37) agencé dans la zone de l'extrémité de sortie de broche (35) de la partie rotative (3) est agencé à l'intérieur de la partie rotative (3), de préférence sur un côté intérieur de la partie rotative (3).

2. Entraînement électromécanique à broche selon la revendication 1, **caractérisé en ce que** l'au moins un palier (37) agencé dans la zone de l'extrémité de sortie de broche (35) de la partie rotative (3) est réalisé sous la forme d'un palier radial.

3. Entraînement électromécanique à broche selon la revendication 1 ou 2, **caractérisé en ce que** l'au moins un palier (37) agencé dans la zone de l'extrémité de sortie de broche (35) de la partie rotative (3) est agencé entre la face intérieure de la partie rotative (3) et un logement de palier (36) s'étendant à l'intérieur de la partie rotative (3), le logement de palier (36) étant de préférence formé sur une partie de boîtier (13c), de préférence un couvercle frontal, du boîtier (13).

4. Entraînement électromécanique à broche selon l'une des revendications précédentes, **caractérisé en ce que** l'au moins un palier (37) agencé dans la zone de l'extrémité de sortie de broche (35) de la partie rotative (3) est agencé à l'intérieur d'une zone entourée par le stator (2a) et/ou le rotor (2b) du moteur (2).

5. Entraînement électromécanique à broche selon l'une des revendications précédentes, **caractérisé en ce que** le stator (2a) du moteur (2) entoure la partie rotative (3) et/ou le rotor (2b) du moteur (2) comprend des éléments polaires fixés à l'extérieur de la partie rotative (3), de préférence de manière amovible.

6. Entraînement électromécanique à broche selon l'une des revendications précédentes, **caractérisé en ce que** l'entraînement à broche (1) est un entraînement à broche à rouleaux dans lequel des éléments roulants (45), en particulier sous forme de billes, sont guidés dans un circuit de circulation, une première section du circuit de circulation étant formée entre le filetage intérieur de la partie rotative (3) et le filetage extérieur de la broche (23), et une deuxième section étant formée par un canal de retour (44), le canal de retour (44) étant formé à l'intérieur de la broche (23).

7. Entraînement électromécanique à broche selon l'une des revendications précédentes, **caractérisé en ce qu'**une partie rapportée (40) est raccordée à la partie rotative (3) à l'extrémité de la partie rotative (3) opposée à l'extrémité de sortie de broche (35), la partie rapportée (40) présentant, de préférence, une section située à l'intérieur de la partie rotative (3) et/ou formant une butée pour la broche (23).

8. Entraînement électromécanique à broche selon la revendication 7, **caractérisé en ce qu'**une section (46) de la partie rapportée (40) située à l'extérieur de la partie rotative (3) est réalisée sous la forme d'une tige, l'axe longitudinal de la section en forme de tige (46) coïncidant avec l'axe de rotation (4) de la partie rotative (3), le diamètre maximal de la partie rapportée (40) située à l'intérieur de la partie rotative (3) étant de préférence au moins 3 fois, de préférence au moins 4 fois, plus grand que le diamètre de la section en forme de tige (46).

9. Entraînement électromécanique à broche selon la revendication 7 ou 8, **caractérisé en ce que** l'entraînement à broche (1) comprend un dispositif capteur (47), une section (46) de la partie rapportée (40) située à l'extérieur de la partie rotative (3) se trouvant dans la zone de détection du dispositif capteur (47), le dispositif capteur (47) étant de préférence un capteur rotatif qui détecte la rotation de la partie rapportée (40).

10. Entraînement électromécanique à broche selon l'une des revendications 7 à 9, **caractérisé en ce qu'**un canal de lubrification (41) est formé dans la partie rapportée (40) pour acheminer un lubrifiant à l'intérieur de la partie rotative (3).

11. Entraînement électromécanique à broche selon la revendication 10, **caractérisé en ce que** le tracé d'une première section (42) du canal de lubrification (41) est aligné avec l'axe de rotation (4) de la partie rotative (3), la première section (42) du canal de lubrification (41) s'étendant de préférence dans une section (46) de la partie rapportée (40) située à l'extérieur de la partie rotative (3),
et/ou **en ce que** le tracé d'une deuxième section (43) du canal de lubrification (41) présente une composante radiale par rapport à l'axe de rotation (4) et/ou est oblique par rapport à l'axe de rotation (4), la deuxième section (43) du canal de lubrification (41) s'étendant de préférence dans une section de la partie rapportée (40) située à l'intérieur de la partie rotative (3) et/ou se terminant au niveau d'un point de sortie (48) qui est agencé, par rapport à l'axe de rotation (4), dans une zone périphérique de la partie rapportée (40).

12. Entraînement électromécanique à broche selon l'une des revendications 7 à 11, **caractérisé en ce que** la partie rapportée (40) est entourée par un dispositif de freinage (5) de l'entraînement à broche (1), la partie rapportée (40) étant de préférence située à l'intérieur d'un évidement central d'un disque de frein (6) du dispositif de freinage (5) et/ou formant un logement de préférence à engagement positif pour un disque de frein (6) du dispositif de freinage (5).

13. Ensemble de composants d'entraînement à broche comprenant des composants pour plusieurs entraînements électromécaniques à broche (1) selon l'une des revendications précédentes, **caractérisé en ce que** l'ensemble de composants comprend des composants de différents types et les composants comprenant des interfaces de connexion pour raccorder les composants entre eux, et **en ce que** les composants du même type ont différentes tailles, les interfaces de connexion des composants de tailles différentes du même type ayant des dimensions identiques.

14. Ensemble de composants d'entraînement à broche selon la revendication 13, **caractérisé en ce que** l'ensemble de composants comprend
- des pièces rotatives de différentes longueurs et/ou largeurs et
- des pièces de boîtier de différentes longueurs et/ou largeurs et/ou des moteurs de différentes longueurs et/ou largeurs,
les interfaces de connexion des pièces rotatives pour le raccordement avec les pièces de boîtier et/ou les moteurs sont de dimensions identiques pour toutes les pièces rotatives et/ou les interfaces des pièces de boîtier et/ou des moteurs pour le raccordement avec les pièces rotatives sont de dimensions identiques pour toutes les pièces de boîtier et/ou tous les moteurs.

15. Machine de formage (20), en particulier cintreuse, pour le formage d'une pièce (27) de préférence en forme de plaque, la machine de formage (20) comprenant
- au moins un entraînement électromécanique (1),
- au moins un outil de formage (28) dont le mouvement de travail est effectué par l'entraînement électromécanique (1),
**caractérisée en ce que** l'entraînement électromécanique (1) est un entraînement à broche selon l'une des revendications 1 à 12.

16. Procédé pour former une pièce à usiner, de préférence en forme de plaque (27) à l'aide d'une machine de formage (20), en particulier d'une machine à cintrer, **caractérisé en ce que** la machine de formage (20) est une machine de formage selon la revendication 15 et **en ce que** le moteur (2) de l'entraînement électromécanique à broche (1) destiné à former la pièce (27) est commandé par un dispositif de commande (30).
